# EUROPEAN PATENT SPECIFICATION

(11) **EP 2 721 898 B1**
(45) Date of publication and mention of the grant of the patent: **02.12.2015**
(21) Application number: 11733925.9
(22) Date of filing: 17.06.2011
(51) Int. Cl.: H04W 76/04, H04W 76/02

(54) **METHOD AND RADIO BASE STATION IN A CELLULAR COMMUNICATIONS NETWORK FOR DEVICE -TO -DEVICE COMMUNICATIONS**
VERFAHREN UND FUNKBASISSTATION IN EINEM MOBILFUNKNETZ FÜR GERÄTE-ZU-GERÄTE-KOMMUNIKATION
PROCÉDÉ ET STATION DE BASE RADIO DANS UN RÉSEAU DE COMMUNICATION CELLULAIRE POUR COMMUNICATIONS DE DISPOSITIF À DISPOSITIF

(43) Date of publication of application: 23.04.2014
(73) Proprietor: Telefonaktiebolaget LM Ericsson (PUBL), 164 83 Stockholm (SE)
(72) Inventor: FODOR, Gabor, S-165 52 Hässelby (SE); MIKLÓS, György, H-2097 Pilisborosjenö (HU); TURÁNYI, Zoltán, H-2000 Szentendre (HU)
(74) Representative: Ericsson
(86) International application number: PCT/SE2011/050772
(87) International publication number: WO 2012/173544

(56) References cited:
- EP-A1- 1 921 873
- WO-A1-01/15387
- WO-A1-2004/080103
- US-A1- 2010 009 675

## Description

### TECHNICAL FIELD

Embodiments herein relate to a radio base station and a method therein. In particular, it relates to detecting user equipment candidates for a direct device to device connection.

### BACKGROUND

Communication devices such as User Equipments (UE) are also known as e.g. mobile terminals, wireless terminals and/or mobile stations. User equipments are enabled to communicate wirelessly in a cellular communications network or wireless communication system, sometimes also referred to as a cellular radio system or cellular networks. The communication may be performed e.g. between two user equipments, between a user equipment and a regular telephone and/or between a user equipment and a server via a Radio Access Network (RAN) and possibly one or more core networks, comprised within the cellular communications network.

User equipments may further be referred to as mobile telephones, cellular telephones, or laptops with wireless capability, just to mention some further examples. The user equipments in the present context may be, for example, portable, pocket-storable, hand-held, computer-comprised, or vehicle-mounted mobile devices, enabled to communicate voice and/or data, via the RAN, with another entity, such as another user equipment or a server.

The cellular communications network covers a geographical area which is divided into cell areas, wherein each cell area being served by a radio base station, e.g. a Radio base station (RBS), which sometimes may be referred to as e.g. "eNB", "eNodeB", "NodeB", "B node", or BTS (Base Transceiver Station), depending on the technology and terminology used. The radio base stations may be of different classes such as e.g. macro eNodeB, home eNodeB or pico radio base station, based on transmission power and thereby also cell size. A cell is the geographical area where radio coverage is provided by the radio base station at a radio base station site. One radio base station, situated on the radio base station site, may serve one or several cells. Further, each radio base station may support one or several communication technologies. The radio base stations communicate over the air interface operating on radio frequencies with the user equipments within range of the radio base stations.

In some RANs, several radio base stations may be connected, e.g. by landlines or microwave, to a radio network controller, e.g. a Radio Network Controller (RNC) in Universal Mobile Telecommunications System (UMTS), and/or to each other. The radio network controller, also sometimes termed a Radio base station Controller (BSC) e.g. in GSM, may supervise and coordinate various activities of the plural radio base stations connected thereto. GSM is an abbreviation for Global System for Mobile Communications (originally: Groupe Special Mobile).

In 3rd Generation Partnership Project (3GPP) Long Term Evolution (LTE), radio base stations, which may be referred to as eNodeBs or even eNBs, may be directly connected to one or more core networks.

UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for user equipments. The 3GPP has undertaken to evolve further the UTRAN and GSM based radio access network technologies.

According to 3GPP/GERAN, a user equipment has a multi-slot class, which determines the maximum transfer rate in the uplink and downlink direction. GERAN is an abbreviation for GSM EDGE Radio Access Network. EDGE is further an abbreviation for Enhanced Data rates for GSM Evolution.

In the context of this disclosure, the expression DownLink (DL) is used for the transmission path from the radio base station to the mobile station. The expression UpLink (UL) is used for the transmission path in the opposite direction i.e. from the mobile station to the radio base station.

### Cellular Network Assisted Device-to-Device Communications

It is widely anticipated that more and more user equipments will get a mobile wireless network interface, including devices like cameras, ebook readers, hi-fi systems, etc. In many cases a user would want to use some of these devices to communicate with each other even when they are nearby. This increases the likelihood of two communicating devices in a cellular system being in close proximity, e.g. a few tens of meters of one another up to a distance of several hundred meters. Since a user equipment can communicate with a base station being several hundred meters away, there is no reason why the user equipment-user equipment distance could not reach a similar distance. Note that even in Bluetooth, high end devices, at least in theory, have a range of several hundred meters.

There may be a range of alternative communication possibilities for two nearby devices which are more efficient than communicating through a wireless access point or base station, both from the point of view of the user and the operator. Such alternative may be the use of direct Device-to-Device (D2D) communication mode of the radio technology. Alternatively, the devices may be able to communicate using another Radio Access Technology (RAT) provided that both of them have such capability.

Hence it may be advantageous to support the setup of such D2D direct connectivity from the cellular network. To enable this, the devices first need to discover their proximity, find each other and agree on the specific way they will subsequently communicate.

In today's mobile cellular networks, communication takes place via a RAN and Core Network (CN) even if the communication is between two nearby user equipments. I.e. when one user equipment communicates with another user equipment in the same cell via a cellular infrastructure, the user plane goes through several RAN and CN entities. In direct mode, i.e. a direct D2D connection, the user plane is a single hop path. Likewise, in a Wireless Local Area Network (WLAN), two devices communicate via the WLAN access point and a core network, such as a home network, corporate network or an Internet Service Provider (ISP) network rather than communicating directly via a single hop link between the devices. The user plane is the set of entities, protocols and procedures that allow a user equipment to send and receive data generated or consumed by a human user, application programs or other content generating entity.

At present there is no known technology deployed in the mobile system to enable the setup of a direct D2D path. On the other hand, there are a set of technologies that can set up such a direct D2D path on their own, such as Bluetooth, Wireless Local Area Network (WLAN) or ZigBee. ZigBee is a specification for a suite of high level communication protocols using small, low power digital radios based on a standard for Low-Rate Wireless Personal Area Networks (LR-WPANs).

Currently, D2D communications underlying a cellular infrastructure is discussed, focusing on the radio resource management aspects and in particular the interference management between the D2D and the cellular layer.

Likewise, making use of the physical proximity in communication networks has been discussed, which aims to provide an energy and resource efficient mechanism to allow potential peer devices to discover one another. That solution uses the cellular network in a limited way only, i.e. to provide synchronization. Apart from that, a device discovery mechanism is used that is independent from the cellular system.

While it is certainly possible to rely on a completely separate technology for the direct D2D path, it has a number of disadvantages.

It requires another radio interface in the devices to be continuously switched on and work to find other nearby devices, which consumes energy.

Further, setting up such an independent radio communication may require additional user intervention, such as pressing some button or entering some PIN codes on the devices, hence it may be inconvenient for the user.

In fact, in the case the radio technology used in the mobile system also has a D2D mode, there is no need to rely on another radio technology for D2D communication.

There are two methods for the cellular network to facilitate device discovery for D2D links that have been discussed. In the first method, the GateWay (GW) node, i.e., the Packet Data Network (PDN) GW in the Evolved Packet Core (EPC) architecture, is responsible for recognizing that two communicating user equipments are at the same or neighboring radio base stations. The PDN GW may base its decision on a tunnel endpoint address of the radio base stations, i.e. whether the user equipments have traffic that are tunneled to the same radio base station, based on their Internet Protocol (IP) address, or to two neighboring radio base stations, based on some a priori knowledge of radio base station neighborhood relations. This, however, has several drawbacks.

There is no guarantee that two communicating user equipments get the same PDN GW assigned. In fact, the PDN GW selection is such that it usually tries to distribute the load among multiple GW nodes, hence there is a high likelihood that the user equipments can be assigned to different PDN GWs. The consequence of that is that there is no PDN GW that would have information about the whereabouts of both user equipments.

Even if the two user equipments are assigned to the same PDN GW, that PDN GW would not have information about the radio base stations by itself. In the EPC architecture, it is the serving GW which knows the identity of the radio base station. However, the serving GW does not know by itself which user equipment communicates with which other user equipment, that information is only available at the PDN GW, and only if the two user equipments use the same PDN GW as noted above. So this solution would require the Serving GW and the PDN GW to be collocated and/or other extensions would be required.

A radio base station may have multiple IP addresses, so it is not so straightforward to identify the radio base stations with their IP address only. And IP address reconfiguration in the radio base stations would immediately require configuration changes to the GWs which would be a burden to the operator. Also, configuring radio base station neighborhood relations to the GWs is a big burden to the operator.

This solution would also require traffic that is candidate for D2D to be "earmarked" so that the radio base station can recognize it as such. However, such an "earmarking" would also require changes to the existing specification and introduces additional processing complexity.

The other method for D2D setup, is based on Session Initiated Protocol (SIP) messages that are tunneled over Non-Access Stratum (NAS) from the user equipment to the Mobility Management Entity (MME). However, such a method is rather limited in use.

It is restricted to a SIP based application. But it is expected that the majority of applications that benefit from D2D links will be non-SIP based.

This solution would require a SIP server to be deployed in the MME, which would be completely new functionality and introduce unnecessary complexity.

It is unclear how the SIP D2D setup would be integrated with the normal SIP setup without D2D. Just trying with a D2D setup first would introduce a high additional latency to session setups which is not acceptable. Doing a SIP D2D setup in parallel to a regular SIP setup may be quite complex to manage.

EP WO 01/15387 discloses a Direct Mode (DM) communication method between two Mobile Terminals (MTs) in Access Point (AP) controlled WLAN systems. The DM connection scheme calls for establishing that an initiating MT and a remote MT are associated to the same AP; establishing that the remote MT supports a DM operation feature; sending, by the AP, address identifiers of the initiating and remote MTs to the remote and initiating MTs, respectively, including Received Signal Strength (RSS) measurements between the two MTs.

US 2010/009675 discloses apparatus, methods and computer programs to establish device-to-device communications in a wireless network. A method includes sending an initiation message from a first device to initiate device-to-device communication with a second device; receiving a message indicating a request for setting up radio resources for device-to-device communication; sending a message to the second device, the message including a request to set up resources for device-to-device communication and, in response to establishing device-to-device communication with the second device using the resources, sending an acknowledgment that device-to-device communication is established.

### SUMMARY

It is therefore an object of embodiments herein to provide a way of improving the efficiency of handling direct device to device connections.

According to a first aspect of embodiments herein, the object is achieved by a method in a radio base station for establishing user equipment candidates for a direct device to device connection. The direct device to device connection is wireless, and the radio base station is comprised in a wireless communication network. The method comprises:
Detecting that a first user equipment transmits data packets to a second Internet Protocol, IP, address then being a destination IP address, via the radio base station or receives data packets from the second IP address then being a source IP address via the radio base station. Further detecting that the second IP address is assigned to a second user equipment, which first user equipment and second user equipment are comprised in the wireless communication network. Further detecting that the second user equipment transmits data packets to a first IP address, then being a destination IP address, via the radio base station or receives data packets from the first IP address, then being a source IP address, via the radio base station. The detecting further comprises recognizing that the data packet transmission is between two user equipments that the radio base station serves, or that the radio base station and the neighbour radio base station serve when there is a match between the source IP address and the destination IP address of an uplink and a downlink flow, respectively.

Establishing that the first user equipment and the second user equipment are candidates for a direct device to device connection between each other, based on the detecting.

Receiving a first information comprising that the first user equipment has capabilities for a direct device to device connection, and a second information comprising that the second user equipment has capabilities for a direct device to device connection. The first information further comprises that a first radio access technology configuration will be used by the first user equipment for a device to device connection, and the second information further comprises that a second radio access technology configuration will be used by the second user equipment for a device to device connection.

Obtaining the second IP address assigned to the second user equipment, and obtaining the first IP address assigned to the first user equipment. The detecting further comprises:
Detecting that the first user equipment and second user equipment both have capabilities for a direct device to device connection and detecting that the first radio access technology configuration and second radio access technology configuration are configurations of the same technology.

The establishing is further based on that both the first user equipment and the second user equipment have capabilities for a direct device to device connection, and that the first technology configuration and second technology configuration are configurations of the same technology.

Wherein at least one of:
a) The obtaining the second IP address assigned to the second user equipment further comprises obtaining an access point name of a packet data network connected to the second user equipment or a representation of the access point name, and/or a public land mobile network of the second user equipment or a representation of the public land mobile network. Wherein detecting that the second IP address is assigned to the second user equipment, is further based on the obtained access point name or the representation of it and/or the public land mobile network or the representation of the public land mobile network.
b) The obtaining a second IP address assigned to the second user equipment, further comprises obtaining a token identifying an external packet data network, or a representation of the token. Wherein detecting that the second IP address is assigned to the second user equipment, is further based on the obtained token or representation of it.
c) The obtaining the second IP address assigned to the second user equipment, further comprises obtaining a first representation of the data packets transmitted to the second IP address via the radio base station in uplink transmission and a second representation of the data packets transmitted to the second IP address via the radio base station in downlink transmission.

The method further comprises:
Identifying that said data packets transmitted in uplink transmission and said data packets transmitted in downlink transmission are the same data packets when the first representation of the data packets and the second representation of the data packets are identical.

The detecting that the second IP address is assigned to the second user equipment, further comprises the identifying that said data packets transmitted in uplink transmission and said data packets transmitted in downlink transmission are the same data packets.

According to a second aspect of embodiments herein, the object is achieved by a radio base station for establishing user equipment candidates for a wireless direct device to device connection. The radio base station is comprised in a wireless communication network. The radio base station comprises:
A processing unit configured to detect that a first user equipment transmits data packets to a second Internet Protocol, IP, address then being a destination IP address via the radio base station or receives data packets from the second IP address then being a source IP address via the radio base station. Further to detect that the second IP address is assigned to a second user equipment. The first user equipment and second user equipment are comprised in the wireless communication network. Further to detect that the second user equipment transmits data packets to a first IP address, then being a destination IP address, via the radio base station or receives data packets from the first IP address, then being a source IP address, via the radio base station, and to recognize that the data packet transmission is between two user equipments that the radio base station serves, or that the radio base station and the neighbour radio base station serve when there is a match between the source IP address and the destination IP address of an uplink and a downlink flow, respectively.

The processing unit is further configured to establish that the first user equipment and the second user equipment are candidates for a direct device to device connection between each other, based on the detection, the radio base station.

The radio base station further comprises:
A transmitter configured to receive a first information comprising that the first user equipment has capabilities for a direct device to device connection, and a second information comprising that the second user equipment has capabilities for a direct device to device connection. The first information further comprises that a first radio access technology configuration will be used by the first user equipment for a device to device connection. The second information further comprises that a second radio access technology configuration will be used by the second user equipment for a device to device connection.

An obtaining unit configured to obtain the second IP address assigned to the second user equipment, and to obtain the first IP address assigned to the first user equipment.

The processing unit is further configured to:
Detect that the first user equipment and second user equipment both have capabilities for a direct device to device connection and detect that the first radio access technology configuration and second radio access technology configuration are configurations of the same technology. , and
Establish that the first user equipment and second user equipment are candidates for a direct D2D connection between each other, which is further based on that both the first user equipment and the second user equipment have capabilities for a direct device to device connection, and that the first technology configuration and second technology configuration are configurations of the same technology.

Werein at least one of:
a) The obtaining unit is further configured to obtain an access point name of a packet data network connected to the second user equipment or a representation of the access point name, and/or a public land mobile network of the second user equipment or a representation of the public land mobile network. Wherein the processing unit is further configured to detect that the second IP address is assigned to the second user equipment by means of the obtained access point name or the representation of the access point name and/or the public land mobile network or a representation of the public land mobile network.
b) The obtaining unit is further configured to obtain a token identifying an external packet data network, or a representation of the token. Wherein the processing unit is further configured to detect that the second IP address is assigned to the second user equipment by means of the obtained token or representation of it.
c) The obtaining unit is further configured to obtain a first representation of the data packets transmitted to the second IP address via the radio base station in uplink transmission and a second representation of the data packets transmitted to the second IP address via the radio base station in downlink transmission.

The processing unit is further configured to identify that said data packets transmitted in uplink transmission and said data packets transmitted in downlink transmission are the same data packets when the first representation of the data packets and the second representation of the data packets are identical.

The processing unit is further configured to detect that the second IP address is assigned to the second user equipment, by means of the identification that said data packets transmitted in uplink transmission and said data packets transmitted in downlink transmission are the same data packets.

Since the radio base station detects that the first user equipment transmits data packets to or receives data packets from the second IP address. And since the radio base station further detects that the second IP address is assigned to a second user equipment, the radio base station can establish that the first user equipment and the second user equipment are candidates for a direct device to device connection between each other, which results in improved efficiency of handling direct device to device connections.

### BRIEF DESCRIPTION OF THE DRAWINGS

Examples of embodiments herein are described in more detail with reference to attached drawings in which:
- Figure 1: is a schematic block diagram illustrating embodiments in a wireless communications network.
- Figure 2: is a flowchart depicting embodiments of a method in a radio base station.
- Figure 3: is a schematic block diagram illustrating embodiments in a wireless communications network.
- Figure 4: is a flowchart depicting embodiments of a method in a radio base station
- Figure 5: is a schematic block diagram illustrating embodiments of a radio base station.

### DETAILED DESCRIPTION

Embodiments will be exemplified in the following non-limiting description.

According to embodiments herein, a radio base station analyzes the traffic flow that passes through it and checks the IP addresses in the traffic to see if two of its user equipments communicate with each other. In case of private IPv4 addresses, or even for public addresses, the radio base station uses auxiliary information to make a decision, such as signatures calculated from the payload.

In the case it detects that a traffic flow that passes through in the uplink is probably the same as a traffic flow that passes through in the downlink towards another user equipment, the radio base station considers the respective user equipments as candidates for direct device to device communication.

Once the radio base station identified device to device candidates, it may instructs the candidate devices to attempt to set up a direct device to device connection and inform them of the IP address of the respective device to device candidate for routing purposes.

Some embodiments are extended to identify the same traffic flow in neighboring radio base stations, i.e. two communicating user equipments in the vicinity of one another but connected to two neighboring radio base station. In these embodiments, the properties of the traffic flow may be conveyed from one radio base station to the neighboring radio base station to identify such device to device candidates.

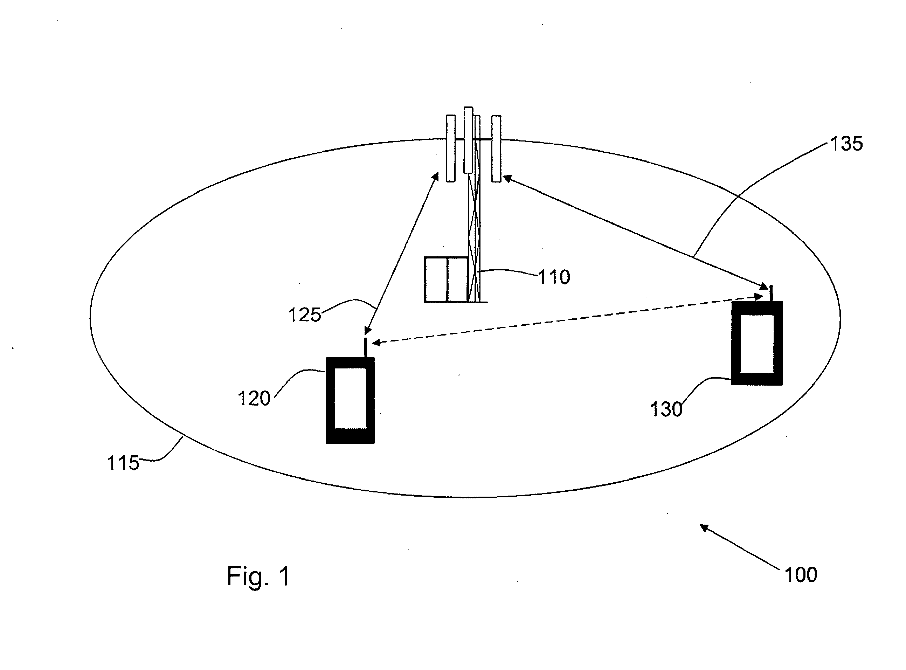

Figure 1 depicts a wireless communications network 100 in which embodiments herein may be implemented. The wireless communications network 100 may be a cellular communication network such as an LTE, WCDMA, GSM network, any 3GPP cellular network, or any cellular network or system. The wireless communications network 100 may also be a non-3GPP cellular network, such as a Worldwide Interoperability for Microwave Access (WiMax) network, or an infrastructure based wireless local area network (WLAN). A radio access network and possibly one or more core networks used in embodiments herein are comprised within the wireless communications network 100.

The wireless communications network 100 comprises a radio base station 110. The radio base station 110 serves a cell 115 and may in some embodiments be part of the radio access network. The radio base station 110 may e.g. be an eNB, eNodeB, or a Home Node B, a Home eNode B or any other network unit capable to serve a user equipment or a machine type communication device in a wireless communications network 100.

A first user equipment 120 is located within the cell 115. The first user equipment 120 is configured to communicate within the cellular communications network 100 via the radio base station 110 over a radio link 125 when the first user equipment 120 is present in the cell 115 served by the radio base station 110. The first user equipment 120 has capabilities to communicate with another device, such as another user equipment over a direct device to device connection. A direct device to device connection means that the communication i.e. transmission and reception of signals and encoding and decoding information, is performed without passing, i.e. not via, any radio base station or intermediate node. The direct device to device connection is in this document referred to as a direct D2D connection. It may also be referred to as a peer to peer connection. A first IP address is in some embodiments herein assigned to the first user equipment 120.

A second user equipment 130 is also located within the cell 115. The second user equipment 130 is configured to communicate within the cellular communications network 100 via the radio base station 110 over a radio link 135 when the second user equipment 130 is present in the cell 115 served by the radio base station 110. The second user equipment 130 has capabilities to communicate with another device, such as another user equipment over a direct D2D connection. This may be referred to as a peer to peer connection or direct D2D connection. A second IP address is assigned to the second user equipment 130.

The first user equipment 120 and the second user equipment 130 are communicating with each other via the radio base station 110, i.e. they are transmitting and receiving data packets to and from each other via the radio base station 110.

The first user equipment 120 and the second user equipment 130 may e.g. be mobile terminals or wireless terminals, mobile phones, computers such as e.g. a laptop, Personal Digital Assistant (PDA) or tablet computers, sometimes referred to as surf plates, with wireless capability, or any other radio network unit capable to communicate over a radio link in a wireless communications system.

The Internet Protocol (IP) addresses used in embodiments herein may e.g. be IPv6 addresses, and public IPv4 addresses, but may also be private IPv4 addresses. Public IPv4/v6 addresses are globally unique internet protocol addresses, whereas private IPv4/v6 addresses are assigned by organizations, individuals or businesses with significance within the private network of an organization, company or enterprise. Thus, private IPv4 addresses may not be unique globally.

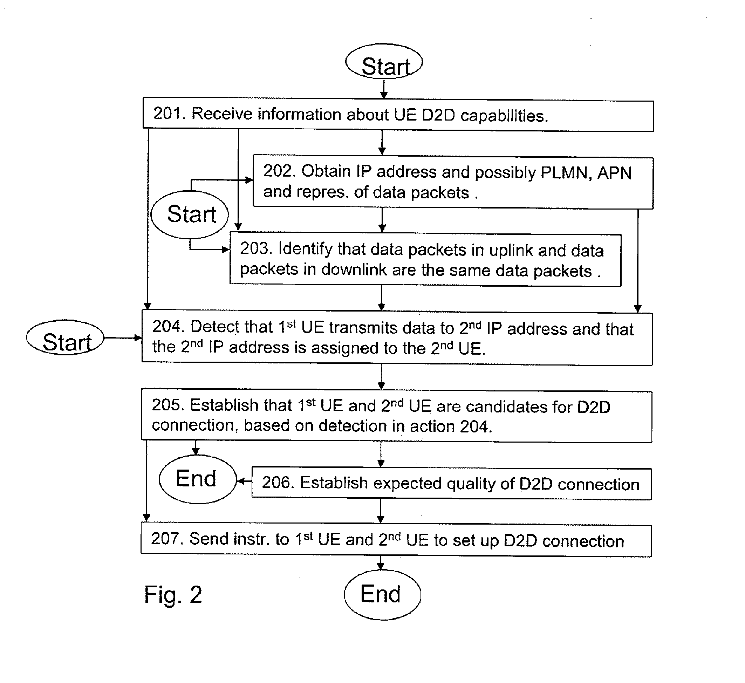

Embodiments of a method in the radio base station 110 for establishing user equipment candidates for a wireless direct D2D connection will now be described with reference to the flowchart depicted in Figure 2. As mentioned above, the radio base station 110, the first user equipment 120 and the second user equipment 130 are comprised in the wireless communication network 100. In this example scenario, the first user equipment 120 transmits data packets to the second user equipment 130. It is transmitted via the radio base station 110 to the second user equipment 130 by means of the second IP address of the second user equipment 130.

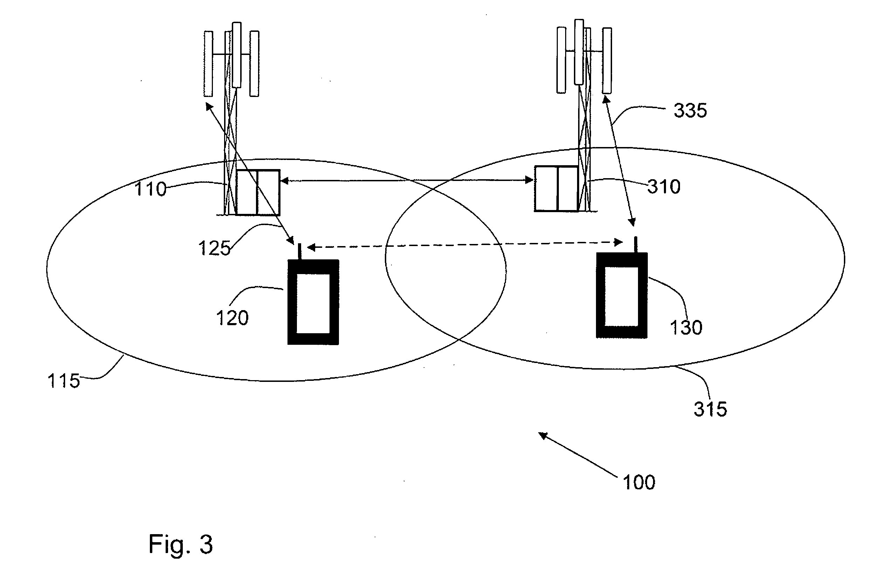

Figure 2, shows a scenario with a single radio base station, i.e. the radio base station 110. In Figure 3 below, a second scenario with extension to multiple radio base stations are disclosed.

The method comprises the following actions, which actions may as well be carried out in another suitable order than described below.

### Action 201

In some embodiments the radio base station 110 gets informed about the device to device connection capabilities of a specific user equipment, i.e. in this case the first user equipment 120 and the second user equipment 130. It is an advantage to let the radio base station 110 only attempt to trigger a set up a device to device connection path if both user equipments have this capability, and further that they have the same technology configuration such that the device to device connection possibility is present. Examples for such radio interface technologies comprise Orthogonal Frequency Division Multiplexing (OFDM), and Single Carrier Frequency Division Multiplexing (SC-FDM), but any other radio access technology may also be used for the direct D2D connection.

In these embodiments the radio base station 110 receives a first information comprising that the first user equipment 120 has capabilities for a direct D2D connection. The first information may further comprise that a first radio access technology configuration will be used by the first user equipment 120 for a device to device connection.

The radio base station 110 may also receive a second information comprising that the second user equipment 130 has capabilities for a direct D2D connection.

The second information may further comprise that a second radio access technology configuration will be used by the second user equipment 130 for a device to device connection.

This action may be accomplished e.g. by the first user equipment 120 and the second user equipment 130 informing the radio base station 110 about its respective device to device connection capabilities by explicit signaling.

Another way is that the device to device connection capabilities and/or technology configuration of the respective devices are downloaded from the core network to the radio base station 110. Additionally, the respective device to device connection capabilities may also be comprised in the context of the respective first user equipment 120 and second user equipment 130 when any of them handovers into the radio base station 110. The core network may become aware of device to device connection capabilities of the respective first user equipment 120 and/or the second user equipment 130 based on subscription, or by a priori core network signaling.

Relating to Action 202 and 204 below, the radio base station 110 investigates the source and/or the destination IP addresses used in the uplink and downlink traffic of transmitted data packets on a per user equipment and per bearer basis. If the radio base station 110 knows the IP address(es) or prefix(es) assigned to user equipments, there is no need to match both the source and destination address of flows of transmitted data packets. It is enough that one of the user equipments transmit to an IP address that belongs to another user equipment currently served by the radio base station 110. The radio base station may in addition, verify that there is a corresponding downlink flow. The IP address prefix is a subset of the IP address, basically the first n bits of the IP address. For example the first 8-bits of an IP address X, often written as X/8, is the 8-bit prefix of X. The prefix may be important in e.g. some routing decisions, where the routing decision is based on the prefix rather than on the entire IP address. In the case of IPv6, the first user equipment 120 and the second user equipment 130 are identified by the 64-bit prefix of the IPv6 address, rather than the full 128-bit address. So if the base station 110 gets information about an IPv6 address of a user equipment, that may be the prefix only, not the full address, but the prefix is sufficient to identify the user equipment.

I.e., when communicating with the first user equipment 120, the radio base station 110 investigates the IP address of the user equipment that the first user equipment 120 is communicating with, to examine if it is assigned to a user equipment that the radio base station 110 serves. I.e. in this case the radio base station 110 can recognize that the first user equipment communicates with the second IP address and therefore investigates the second IP address. In case of IPv6 addresses and public IPv4 addresses if there is a match between the second IP address and a user equipment that the base station serves, or in some embodiments, between the source and destination IP address of an uplink and a downlink flow, respectively, the radio base station can conclude that the flow is between two of its user equipments that it serves.

If any of the addresses in question are private IPv4 addresses the mere agreement of the destination does not reliably indicate that the two user equipments are indeed communicating with each other. In this case the radio base station 110 needs to acquire additional information to make a correct decision. This may be done in multiple alternative ways as will be described below.

### Action 202

In some embodiments the radio base station 110 obtains the second IP address assigned to the second user equipment 130. The radio base station 110 may further obtain the first IP address assigned to the first user equipment 130. How this is performed will be described more in detail below.

In some embodiments, the radio base station 110 further obtains an Access Point Name (APN) of a packet data network connected to the second user equipment 130 or a representation of the APN, and/or a Public Land Mobile Network (PLMN) of the second user equipment 130. How this is performed will be described more in detail below.

The radio base station 110 may further obtain a token identifying an external packet data network, or a representation of the token. A token is a bit pattern that uniquely identifies the network. How this is performed will also be described more in detail below.

In some embodiments, the radio base station 110 further obtains a first representation of the data packets transmitted to the second IP address via the radio base station 110 in uplink transmission, and a second representation of the data packets transmitted to the second IP address via the radio base station 110 in downlink transmission. How this is performed will be described more in detail below.

### Action 203

According to some embodiments, the radio base station 110 identifies that said data packets transmitted in uplink transmission and said data packets transmitted in downlink transmission are the same data packets when the first representation of the data packets and the second representation of the data packets are identical.

### Action 204

The radio base station 110 detects that the first user equipment 120 transmits data packets to the second IP address via the radio base station 110. Or the other way around, the radio base stations 110 detects that the first user equipment 120 receives data packets from the second IP address via the radio base station 110.

In this action the radio base station 110 further detects that the second IP address is assigned to the second user equipment 130. The detection that the second IP address is assigned to the second user equipment 130, may be based on the obtained access point name or the representation of it and/or the public land mobile network. The detection that the second IP address is assigned to the second user equipment 130, may further be based on the obtained token or representation of it.

In some embodiments wherein Action 201 has been performed, the radio base station 110 further detects that the first user equipment 120 and second user equipment 130 both have capabilities for a direct D2D connection. The radio base station 110 may further detect that the first radio access technology configuration and second radio access technology configuration are configurations of the same technology.

In some embodiments wherein Action 203 has been performed, the radio base station further detects that the second IP address is assigned to the second user equipment 130, further comprises the identifying that said data packets transmitted in uplink transmission and said data packets transmitted in downlink transmission are the same data packets.

As mentioned above, the radio base station 110 detects activities from the first user equipment 120, i.e. that the first user equipment 120 transmits data packets to the second IP address via the radio base station 110. The second IP address is then a destination IP address. Alternatively, the radio base station 110 detects that the first user equipment 120 receives data packets from the second IP address via the radio base station 110. The second IP address is then a source IP address.

In some embodiments the radio base station 110 also detects activities from the second user equipment 130. In these embodiments, the radio base station 110 further detects that the second user equipment 130 transmits data packets to the first IP address via the radio base station 110. The first IP address is then a destination IP address. Alternatively, the radio base station 110 detects that the second user equipment 130 receives data packets from the first IP address via the radio base station 110. The first IP address is then a source IP address.

In these embodiments, the radio base station 110 may further recognize that the data packet transmission is between two user equipments that the radio base station 110 serves when there is a match between the source IP address and the destination IP address of an uplink and a downlink flow, respectively.

### Action 205

The radio base station 110 establishes that the first user equipment 120 and the second user equipment 130 are candidates for a direct D2D connection between each other, based on the detecting in action 204. This means that when the detections in action 204 are performed, whereof some of them are optional, the radio base station 110 establishes that the first user equipment 120 and the second user equipment 130 are candidates for a direct D2D connection between each other.

In some embodiments, the establishment itself is to create a state that is e.g. a table entry that associates the two user equipments, i.e. in this case the first user equipment 120 and the second user equipment 130, as D2D candidates. Thus the "establishment" may be represented by the creation of such a table entry. Creating a table entry may also mean that the same user equipments that are already identified as candidates, cannot be identified as D2D candidates with other user equipments.

In some embodiments, the establishing that the first user equipment 120 and second user equipment 130 are candidates for a direct D2D connection between each other, is further based on that both the first user equipment 120 and the second user equipment 130 have capabilities for a direct D2D connection.

The establishing 205 that the first user equipment 120 and second user equipment 130 are candidates for a direct D2D connection between each other, may further be based on that the first technology configuration and second technology configuration are configurations of the same technology.

### Action 206

Before the radio base station 110 initiates the setup of the direct D2D connection in action 207, it may be possible to try to predict the expected quality of the direct D2D connection. This may be based on the distance between the first user equipment 120 and the second user equipment 130 and is possible e.g., if location information is available from the user equipments, i.e. in this example the first user equipment 120 and the second user equipment 130. Such location information may be available via a Location Information Server (LIS) or Location Configuration Server (LCS) known from prior art of mobile networks to assist, for example, location based routing algorithms, or from the first user equipment 120 and the second user equipment 130 by explicit signaling if they have some positioning mechanism such as Global Positioning System (GPS) functionality. If the base station 110 acquires, i.e. obtains such location information, it may limit the direct D2D connection to cases where the user equipments, i.e. in this example the first user equipment 120 and the second user equipment 130, are closer to each other, i.e. are located at a distance from each other that is less than a certain threshold. The threshold may be set depending on the type of technology used for the direct D2D connection, or dynamically based on other conditions such as the current system load.

This type of pre-assessment is more important if the first user equipment 120 and the second user equipment are served by neighboring radio base stations which will be described below, since the chances for a sufficiently good direct D2D link quality are lower in that case.

Therefore in some embodiments the radio base station 110 establishes an expected quality of the direct D2D connection.

The establishing of the expected quality of the direct D2D connection may be based on the distance between the first user equipment 120 and the second user equipment 130.

The expected quality of the direct D2D connection may also be based on channel measurement reports.

Optionally, the radio base station 110 requests D2D channel measurement reporting from the D2D candidates, i.e. in this example the first user equipment 120 and the second user equipment 130, before an attempt is made to set up the actual direct D2D connection in action 207. Such channel reporting may be based on methods that are well known in the art, using user equipment specific reference signals such as e.g. channel sounding. Once the radio base station 110 receives the channel measurements, it may use the measurement values to estimate the path loss between the two devices. The path loss estimation may be a good indication to decide whether or not the D2D link setup is to be successful.

In other words, the establishing of the expected quality of the direct D2D connection may be based on a channel quality measurement report received from the first user equipment 120 and/or the second user equipment 130. The channel quality measurement report or reports regard the direct D2D connection.

### Action 207

The radio base station 110 may initiate the setup of the direct D2D path for the direct D2D connection by sending an instruction when it has established that the first user equipment 120 and the second user equipment 130 are candidates for the direct D2D connection between each other. The radio base station 110 may send the instruction to the respective first user equipment 120 and/or second user equipment 130. The instruction instructs the respective first user equipment 120 and/or second user equipment 130 to set up a direct D2D connection between each other. For this, the radio base station 110 may send instructions e.g. by signaling to the respective first and/or second user equipment 120 and 130 to try to establish a direct D2D path.

The signaling may also comprise the type of technology configuration to be used for direct D2D communication, based on the available capabilities of the respective first user equipment 120 and/or second user equipment 130, which are common in both user equipments. In case there are multiple technology choices, the radio base station 110 may select one based on operator policy.

The signaling may further comprise an assignment for "master" and "slave" roles in case the D2D technology configuration uses dynamic asymmetrical role assignments. In some cases, the master and slave roles may be pre-configured into the first user equipment 120 and second user equipment 130 in which case this information may be omitted or ignored.

The signaling may further comprise the identity of the other user equipment. I.e. if signaled to the first user equipment 120, the identity of the second user equipment 130 is comprised in the signalling and vice versa.

Additional information may also be comprised in the signaling such as information for the respective first user equipment 120 and second user equipment 130 to ease the setting up of the direct D2D connection, such as timing and frequency information.

A secret security key may also be comprised in the signalling. This may be a random number chosen by the radio base station 110, and sent over a secure air interface to the respective first user equipment 120 and second user equipment 130. Having the same security key sent to the respective first user equipment 120 and second user equipment 130 may be used to have a pre-established security association for the direct D2D connection. This helps avoid other, less convenient means to set up a security association, such as entering a Personal Identification Number (PIN) code. Note that this may apply also when other technology is used for the direct D2D connection.

Also the IP address(es) or IP prefix(es) of the other user equipment may be comprised in the signalling. Additionally the APN and the token corresponding to the external network could be sent if there is such available, or a hash function of them if applicable. This may be used by a LTE link-layer driver to divert the right packets from the uplink to the D2D link. Optionally the radio base station 110 may include a list of Traffic Flow Templates, e.g. 5-tuples to limit the traffic exchanged over the D2D link. How they are used will be described below. The 5-tuples relates to Source IP Address, Destination IP Address, Source Port number, Destination Port number, Protocol Identifier that uniquely identifies a user data flow within an IP network.

Alternatively the IP addresses may be exchanged by the first user equipment 120 and second user equipment 130 themselves during the establishment of the D2D link.

In case it turns out that the two user equipments have no traffic to each other, the direct D2D connection may be released after some timeout. This may happen when any signature matching in the radio base station 110 provided a false match or if the traffic between the two user equipments were only short lived.

Note that some of the above information may be omitted in certain cases.

In some embodiments wherein Action 206 is performed, the radio base station 110 may perform this action of sending of the instruction to the respective first user equipment 120 and second user equipment 130, at first when the expected quality passes a threshold. An example of a passing the threshold is when a quality measurement report regarding the direct D2D connection received from the first user equipment 120 and/or the second user equipment 130 is too poor i.e. is less than the threshold when relating to quality measurement. Another example of a passing the threshold is when, the distance between the first user equipment 120 and the second user equipment 130 is too long, i.e. exceeds the threshold when relating to distance. To pass the threshold is here meant to exceed or be less than the threshold, which depends on what kind of threshold it relates to. The radio base station 110 may decide not to establish a direct D2D connection in case it predicts that its quality will not be good enough.

Based on the information received from the radio base station 110, one of the user equipments tries to contact the other user equipment for the setup of a direct D2D connection. E.g. the first user equipment 120 may try to contact the second user equipment 130 or vice versa for the setup of the direct D2D connection. However, it may turn out during the process that the quality of the D2D path is not sufficient for an efficient D2D link, and in that case the D2D setup process may be aborted.

Once the direct D2D connection is successfully established, it can be used as an alternate shorter and faster route, resulting in a more efficient route for traffic of data packet transmissions between the first user equipment 120 and second user equipment 130.

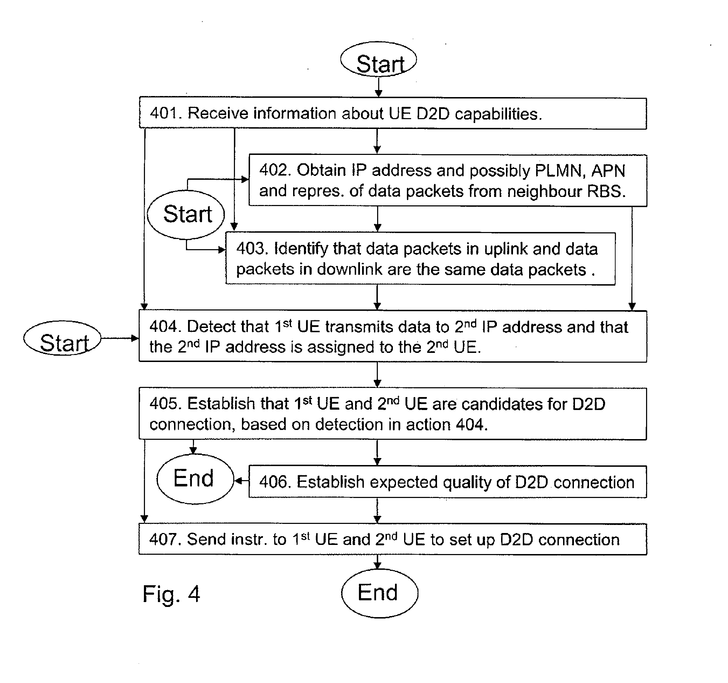

Figure 1 and 2, above shows a scenario with a single radio base station, i.e. the radio base station 110. In Figure 3 and 4 below, a second scenario with extension to multiple radio base stations are disclosed. According to the second scenario it is possible to extend the embodiments herein for multiple base stations, i.e., the first user equipment 120 and the second user equipment 130 being served by neighboring radio base stations. According to embodiments herein, it is possible for two user equipments to be at neighboring radio base stations and yet be able to set up a direct D2D connection, even though such a direct D2D connection is more likely when the user equipments are served by the same base station, and even more likely if they are located in the same cell. To enable device discovery, i.e. user equipment discovery with multiple base stations, the radio base station 110 requires to inform and to be to be informed by the neighboring radio base station 310 about the traffic through it.

Hence Figure 3 depicts the wireless communications network 100 according to the second scenario with multiple base stations in which embodiments herein may be implemented.

In the second scenario, the wireless communications network 100 comprises the radio base station 110 serving the first user equipment 120 in the cell 115 as in Figure 1, and further a neighbour radio base station 310 serving a second cell 315. The neighbor radio base station 310 and the radio base station 110 are neighboring base stations. This means that they are base stations with adjacent or overlapping served geographical areas, i.e. cells. Neighbour base stations typically maintain a communication interface between one another in order to facilitate continuous mobility for served users as they move from the service area of one base station into the service area of the neighbour base station. In the second scenario the second user equipment 120 is located in the second cell 315 and is served by the neighbour radio base station 310. The second user equipment 130 is configured to communicate within the cellular communications network 100 via the neighbour radio base station 310 over a radio link 335. As the radio base station 110, the neighbour radio base station 310 may e.g. be an eNB, eNodeB, or a Home Node B, a Home eNode B, or WLAN Access Point (AP) or any other network unit capable to serve a user equipment or a machine type communication device in a wireless communications network 100.

The first user equipment 120 and the second user equipment 130 are communicating with each other via the radio base station 110, i.e. they are transmitting and receiving data packets to each other via the radio base station 110 and via the neighbour radio base station 310. The radio base station 110 and the neighbour radio base station 310 may communicate with each other directly or via any intermediate node such as a core network node not shown.

Embodiments of a method in the radio base station 110 for establishing user equipment candidates for a wireless direct D2D connection will now be described with reference to the flowchart depicted in Figure 4. As mentioned above, the radio base station 110, the neighbour radio base station 310, the first user equipment 120 and the second user equipment 130 are comprised in the wireless communication network 100. The neighbour radio base station 310 is referred to as neighbour RBS in Figure 4. The first user equipment 120 is served by the radio base station 110 and the second user equipment 130 is served by a neighbour radio base station 310. Also in the second scenario, the first user equipment 120 transmits data packets to the second user equipment 130. The data packets are transmitted via the radio base station 110 and via the neighbour radio base station 310 to the second user equipment 130 by means of the second IP address of the second user equipment 130.

The method comprises the following actions, which actions may as well be carried out in another suitable order than described below. Most of the actions are the same or similar as the actions performed in Figure 2, therefore these actions are not described in detail in relation to Figure 4 but pointed out which action in relation to Figure 2 that they corresponds to.

### Action 401

In some embodiments the radio base station 110 gets informed about the device to device connection capabilities of a specific user equipment, i.e. in this case the first user equipment 120 and the second user equipment 130. As in Action 201, the radio base station 110 may receive a first information comprising that the first user equipment 120 has capabilities for a direct D2D connection. The first information may further comprise that a first radio access technology configuration will be used by the first user equipment 120 for a device to device connection.

As in action 201, the radio base station 110 may also receive a second information comprising that the second user equipment 130 has capabilities for a direct D2D connection. The second information may further comprise that a second radio access technology configuration will be used by the second user equipment 130 for a device to device connection.

However, according to the second scenario, this action 401 may be accomplished e.g. by the first user equipment 120 informing the radio base station 110 and the second user equipment 130 informing the neighbour base station 310 about its respective device to device connection capabilities by explicit signaling. The radio base station 130 may then receive the second information from the neighbour base station 310.

Another way is that the direct D2D connection capabilities and/or technology configuration may be downloaded from the core network to the radio base station 110 or to the neighbour base station 310 and be transmitted to the base station 110. Additionally, the respective device to device connection capabilities may also be comprised in the context of the respective first user equipment 120 and second user equipment 130 when any of them handovers into the radio base station 110 or to the neighbour radio base station 130. The core network may become aware of device to device connection capabilities of the respective first user equipment 120 and/or the second user equipment 130 based on subscription, or by a priori core network signaling. The radio base station 130 may then receive the second information from the neighbour base station 310.

### Action 402

Action 402 corresponds to action 202 but is partly performed in a different way.

In the second scenario, the radio base station 110 may exchange information with the neighboring base station 310 regarding its respective user equipment that they serve and the traffic of data packet transmission of the respective user equipment. If the detection of local traffic of data packet transmission is done solely based on IP addresses, PLMNs and APNs or effective external PDN tokens, the radio base station 110 may receive this information from its neighbors, i.e. the neighbour radio base station 310. Those may be received when the IP address, PLMN and APN information becomes available, e.g. every time a new user equipment becomes connected, hands over to the radio base station 110 or opens/closes a PDN connection. In this case, radio base station 110 shall only see if any of its user equipments send traffic to the received IP addresses and in case of private addresses also belong to the indicated PLMN/APN/token, to detect local connectivity for a direct D2D connection.

If the neighbour radio base station 310 creates signature from the traffic for private IPv4 addresses, it periodically may send the signature of traffic to the neighboring base stations, i.e. the radio base station 110, including the identity of the source base station which in this case is the neighbour base station 310. The signatures of uplink traffic may be sent to neighboring base stations, which they compare with the signatures of downlink traffic. The reverse is also possible. An advantage of sending the uplink traffic signatures rather than the downlink traffic signatures is that uplink traffic is usually less than the downlink traffic, and so the overhead of sending the information may be reduced. Note that the sending of signature information to neighboring base stations may typically be done on a periodic basis rather than after each packet so that the overhead can be reduced. This, however, may introduce additional delays in the process, even though this may not be critical. It is possible to use broadcast or multicast technology for the sending of the signature information to neighboring base stations if supported by the underlying transport network. The signatures will be discussed more in detail below.

In some embodiments the radio base station 110 obtains the second IP address assigned to the second user equipment 130. The radio base station 110 may further obtain the first IP address assigned to the first user equipment 130. How this is performed will be described more in detail below. According to the second scenario the second IP address assigned to the second user equipment 130 may be obtained by the base station from the neighbour radio base station 310.

In some embodiments as in action 202, the radio base station 110 further obtains an APN of a packet data network connected to the second user equipment 130 or a representation of the APN, and/or a PLMN of the second user equipment 130 or a representation of the PLMN. How this is performed will be described more in detail below. The radio base station 110 may as in action 202, further obtain a token identifying an external packet data network, or a representation of the token. According to the second scenario, the access point name of the packet data network connected to the second user equipment 130 or a representation of the access point name, and/or the public land mobile network of the second user equipment 130 and/or the token is obtained from the neighbour radio base station 310.

In some embodiments as in action 202, the radio base station 110 further obtains a first representation of the data packets transmitted to the second IP address via the radio base station 110 in uplink transmission, and a second representation of the data packets transmitted to the second IP address via the radio base station 110 in downlink transmission. According to the second scenario, the second representation of the data packets to the second IP address via the radio base station 110 in downlink transmission is obtained from the neighbour radio base station 310. In this second scenario the downlink transmission is performed from the neighbour radio base station 310 to the second user equipment 130.

### Action 403

Action 403 corresponds to action 203 and is performed in a similar way. According to some embodiments, the radio base station 110 identifies that said data packets transmitted in uplink transmission and said data packets transmitted in downlink transmission are the same data packets when the first representation of the data packets and the second representation of the data packets are identical.

### Action 404

Action 404 corresponds to action 204and is performed in a similar way. The radio base station 110 detects that the first user equipment 120 transmits data packets to the second IP address via the radio base station 110. Or the other way around, the radio base stations 110 detects that the first user equipment 120 receives data packets from the second IP address via the radio base station 110.

In this action the radio base station 110 further detects that the second IP address is assigned to the second user equipment 130. The detection that the second IP address is assigned to the second user equipment 130, may be based on the obtained access point name or the representation of it and/or the public land mobile network. The detection that the second IP address is assigned to the second user equipment 130, may further be based on the obtained token or representation of it.

In some embodiments wherein Action 201 has been performed, the radio base station 110 further detects that the first user equipment 120 and second user equipment 130 both have capabilities for a direct D2D connection. The radio base station 110 may further detect that the first radio access technology configuration and second radio access technology configuration are configurations of the same technology.

In some embodiments wherein Action 203 has been performed, the radio base station the detection that the second IP address is assigned to the second user equipment 130, further comprises the identifying that said data packets transmitted in uplink transmission and said data packets transmitted in downlink transmission are the same data packets.

As mentioned above, the radio base station 110 detects activities from the first user equipment 120, i.e. that the first user equipment 120 transmits data packets to the second IP address via the radio base station 110. The second IP address is then a destination IP address. Alternatively, the radio base station 110 detects that the first user equipment 120 receives data packets from the second IP address via the radio base station 110. The second IP address is then a source IP address.

In some embodiments the radio base station 110 also detects activities from the second user equipment 130. In these embodiments, the radio base station 110 further detects that the second user equipment 130 transmits data packets to the first IP address via the radio base station 110. The first IP address is then a destination IP address. Alternatively, the radio base station 110 detects that the second user equipment 130 receives data packets from the first IP address via the radio base station 110. The first IP address is then a source IP address.

In these embodiments, the radio base station 110 may further recognize that the data packet transmission is between two user equipments that the radio base station 110 and the neighbour radio base station 310 serves when there is a match between the source IP address and the destination IP address of an uplink and a downlink flow, respectively.

### Action 405

Action 405 corresponds to action 205 and is performed in a similar way. The radio base station 110 establishes that the first user equipment 120 and the second user equipment 130 are candidates for a direct D2D connection between each other, based on the detecting in Action 404. This means that when the detections, whereof some of them are optional, in action 404 are performed, the radio base station 110 establishes that the first user equipment 120 and the second user equipment 130 are candidates for a direct D2D connection between each other.

In some embodiments, the establishing that the first user equipment 120 and second user equipment 130 are candidates for a direct D2D connection between each other, is further based on that both the first user equipment 120 and the second user equipment 130 have capabilities for a direct D2D connection.

The establishing 205 that the first user equipment 120 and second user equipment 130 are candidates for a direct D2D connection between each other, may further be based on that the first technology configuration and second technology configuration are configurations of the same technology.

### Action 406

Action 406 corresponds to action 206 and is performed in a similar way. Before the radio base station 110 initiates the setup of the direct D2D connection in action 207, it may be possible to try to predict the expected quality of the direct D2D connection. This may e.g. be based on the distance between the first user equipment 120 and the second user equipment 130 This type of pre-assessment is advantageous in the second scenario wherein the first user equipment 120 and the second user equipment are served by neighboring radio base stations since the chances for a sufficiently good direct D2D link quality are lower in this case.

Therefore in some embodiments the radio base station 110 establishes an expected quality of the direct D2D connection.

The establishing of the expected quality of the direct D2D connection may be based on the distance between the first user equipment 120 and the second user equipment 130.

The expected quality of the direct D2D connection may further be based on channel measurement reports.

Optionally, the radio base station 110 requests D2D channel measurement reporting from the D2D candidates, i.e. in this example the first user equipment 120 and the second user equipment 130, before an attempt is made to set up the actual direct D2D connection in action 207. According to the second scenario, the radio base station 110 requests D2D channel measurement reporting from the second user equipment 130 via the neighbour radio base station.

In this second scenario, the radio base station 110 may instruct the first user equipment 120 to broadcast beacon signals on specific time and frequency resources using state of the art beacon signal generation techniques. The radio base station 110 communicates the beacon signal characteristics and the time frequency resources to the neighbour radio base station 310. The neighbour radio base station 310 may instruct the served second user equipment 130 to perform measurements using prior art techniques on the broadcast beacon signal generated by the first user equipment 120. The second user equipment 130 may use prior art techniques to perform channel quality measurements on the beacon generated by first user equipment 120 and form channel measurement reports on the channel between first user equipment 120 and the second user equipment 130. The second user equipment 130 may transmit the measurement reports periodically to the neighbour radio base station 310. The neighbour radio base station 310 may then send the measurement reports to the radio base station 110 over the interface between radio base station 110 and the neighbour radio base station 310 using prior art techniques, as specified, for example, over an X2 interface in the 3GPP LTE system between two neighboring radio base stations. In 3GPP LTE radio base stations referred to as eNodeBs are connected to each other via the X2 interface. An alternative to this procedure is that the second user equipment 130 generates beacons and the first user equipment 120 forms measurement reports and transmits these reports to radio base station 110.

In other words, the establishing of the expected quality of the direct D2D connection may be based on a channel quality measurement report received from the first user equipment 120 and/or the second user equipment 130. The channel quality measurement report or reports regard the direct D2D connection.

### Action 407

Action 407 corresponds to action 207 and is performed in a similar way. The radio base station 110 may initiate the setup of the direct D2D path for the direct D2D connection by sending an instruction when it has established that the first user equipment 120 and the second user equipment 130 are candidates for the direct D2D connection between each other. The radio base station 110 may send the instruction to the respective first user equipment 120 and/or second user equipment 130. The instruction instructs the respective first user equipment 120 and/or second user equipment 130 to set up a direct D2D connection between each other. According to the second scenario, the radio base station 110 initiates the setup of the direct D2D connection such that the first user equipment 120 is contacted by the radio base station 110 itself, and the second user equipment is contacted via the neighbour radio base station 310 through e.g. explicit signaling. Which signalling may be performed as described under action 207.

In some embodiments wherein Action 206 is performed, the radio base station 110 may perform the sending of the instruction to the respective first user equipment 120 and second user equipment 130, when the expected quality passes a threshold. To pass the threshold is here meant to exceed or be less than the threshold, which depends on what kind if threshold it relates to.

Based on the information received from the radio base station 110, one of the user equipments tries to contact the other user equipment for the setup of a direct D2D connection. E.g. the first user equipment 120 may try to contact the second user equipment 130 or vice versa for the setup of the direct D2D connection. However, it may turn out during the process that the quality of the D2D path is not sufficient related to the threshold for an efficient D2D link, and in that case the D2D setup process may be aborted.

Once the direct D2D connection is successfully established, it can be used as an alternate shorter and faster route resulting in a more efficient route for traffic of data packet transmissions between the first user equipment 120 and second user equipment 130.

The following description in this document is applicable to the embodiments herein also including the first scenario and the second scenario described above.

### APN and PLMN

In many cases the APN of the PDN connection and PLMN, i.e., Home Public Land Mobile Network (HPLMN) or Visited Public Land Mobile Network (VPLMN) depending on where the address is assigned, of a user equipment make a private IPv4 address unique. The APN and the PLMN are not available in the radio base station 110 or neighbour radio base station 130, by default. A simple extension of the 3GPP S1 Application Protocol (AP) and the inclusion of this information in the user equipment RAN context which is transferred during X2 handover could allow the transfer of this information to the respective radio base station 110 or when applicable the neighbour radio base station 310 upon the creation of each PDN connection or at handover. The S1 AP handles user equipment's control and user plane connections between the RAN and the core network, Evolved Packet core (EPC), including participating in the handover when the EPC is involved. In LTE, in X2-handover, the handover is directly performed between two base stations which makes the handover preparation fast, which means faster than in S1 handover. In X2 based handover, a core network entity such as an MME is informed of the handover at the end of the handover procedure when the handover procedure is successful, in order to trigger a path switch. Rather than sending the APN, it is also possible to send some one-way hash function of the APN so that it is not revealed in the respective radio base station 110, and when applicable neighbour radio base station 310. This means that the respective first user equipment 120 and second user equipment 130 can get a higher degree of privacy.

### Token

In some configurations, the same APN is used by multiple user equipment to reach different external PDNs. A demultiplexing may be done in the Gateway General Packet Radio Service Support Node (GGSN)/ Packet Data Network Gateway (PDN GW), which selects an effective external PDN based on some static configuration of the user equipment or based on, for example, the username supplied by a user equipment such as the first user equipment 120 and the second user equipment 130, for the PDN connection establishment. The configuration may also be provided e.g. by RADIUS, which is an example of a protocol that may be used to provide the gateway node with authorization, authentication and accounting information related to a service that a user equipment accesses.

In these cases the PDN GW shall create a token for the external PDN the user equipment get connected to, which shall be included in the response to the PDN connection establishment. This token may then be transferred to the respective radio base station 110 or when applicable neighbour radio base station 310 along with the HPLMN and APN. If such a token is available the radio base station 110 will decide on establishing direct D2D connectivity only if the PLMN and APN and the token of the two user equipments match, in addition to private IPv4 addresses also matching.

As an additional option, it is also possible to have the respective first user equipment 120 and second user equipment 130 to send the APN, PLMN information and possibly a token for the external PDN to the radio base station 110 or when applicable neighbour radio base station 310, instead of involving the network for sending this information. Instead of the APN itself, and the token for the external PDN to the radio base station 110, it is possible to create a one-way hash function of the APN and/or the token, towards the radio base station 110 so that the respective first user equipment 120 and second user equipment 130 privacy are maintained. The respective first and second IP address of the respective first user equipment 120 and second user equipment 130 may also be sent explicitly to the respective radio base station 110 and neighbour radio base station 310 rather than having the base stations discover it from the actual traffic. Here again, it is possible to use a one-way hash function. The token for the external network may be derived at the respective first user equipment 120 and second user equipment 130 based on the APN and the username/password for that APN; or alternatively it may be provided by the GW to the respective first user equipment 120 and second user equipment 130 via explicit signaling through the core network. Again, some hash function can be applied on the information.

### Information from each packet

The respective radio base station 110 and neighbour radio base station 310 may extract some information from each user plane packet, and create a signature from the recent packets.

One way to create such a signature is to use some hash function of the payload, e.g. the number of 1 bits in the payload modulo M, or some other hash function. IP and transport headers might be omitted from this computation. This approach also requires the respective radio base station 110 and when applicable neighbour radio base station 310 to look into the contents of the packet, but may also work in the case of some network proxy node which modifies the 5-tuple information but not the message contents.

Alternatively the respective radio base station 110 and when applicable neighbour radio base station 310 may record packet lengths. This is much coarser information but can also be used in case the respective radio base station 110 and neighbour radio base station 310 do not have a possibility to look into the contents of the packets.

Once the information from each packet is extracted, the respective radio base station 110 and when applicable neighbour radio base station 310 creates the traffic flow signature by listing the extracted values for the packets in a given time window. To enable the use of a time window, the respective radio base station 110 and when applicable neighbour radio base station 310 also have to store the times when the packets were delivered.

The respective radio base station 110 looks for the uplink signatures of traffic flows of one user equipment, i.e. in this case the first user equipment to be found in a downlink signature for another user equipment, i.e. in this case the second user equipment. In case the 5-tuple, or a subset of it is used, it may be sufficient to find the same hash for a single packet, and there may not be a need to have signatures for multiple packets, since the 5-tuple information is expected to be quite reliable. In case the 5-tuple is not used, it may be advantageous to use the hash values for multiple packets in the signature. In that case, the radio base station 110 needs to check whether some of the uplink hash values are found in some of the downlink hash values. If there is a match in some of these hash values, having the same order in uplink and downlink increases the probability of matching of packets. Also, if more of the uplink hash values are found in the downlink signature it increases the probability of match, although it is also possible that the uplink traffic comprises multiple flows. Note that the base station 110 should use a slightly longer time window for the uplink signature in order to allow for some packet latency.

Note that the checking does not need to be done after each packet; the radio base station 110 may perform the check periodically or after a certain number of packets have passed in order to reduce the required computational burden, at the cost of additional delay.

Note that the signature generation method described above may also be applied for terminals with IPv6 or public IPv4 addresses, as well.

### Local traffic

The radio base station 110 may receive additional hints about local traffic. Such hints are optional, and may come from multiple sources e.g. according to the following:
- An explicit signaling from the respective first user equipment 120 and second user equipment 130, which notifies its respective serving radio base station such as the base station 110 and/or when applicable neighbour radio base station 310 whether it is engaged in local traffic or not.
- Information from the core network whether the radio base station 110 should consider D2D direct path. This may be e.g., based on the location of the respective first user equipment 120 and second user equipment 130, and D2D only considered in some "home" cells. Such a hint may also be based on the core network's policy control settings or some dynamic traffic analysis method within the core network.
- The core network may explicitly disable the use of D2D communication for certain devices and/or certain areas based on operator policy. It may also be possible to disable the use of direct D2D communication on a per bearer basis, such that e.g. IP Multimedia Subsystem (IMS) communication may be placed on one bearer which is not subject to D2D communication. For an operator requiring an even finer granularity of control, it is possible to send packet filters from the core network to the radio base station to define which traffic should be excluded from D2D possibility. The radio base station 110 shall not compute signatures for traffic that is excluded from D2D based on operator policy.
- D2D setup may be limited to user equipments in the same cell only, or to user equipments with certain radio channel characteristics.

When such hints are available, the computation of signatures can be limited to the user equipments where the D2D link may be applicable based on the hints

### Special bit pattern in the traffic

The respective first user equipment 120 and/or second user equipment 130 may support the matching process in the radio base station 110 by sending some well-known bit pattern which is more easily detected at the radio base station 110. This is useful especially when the user equipment is using a private IPv4 address. It may be difficult to define a bit pattern which can be sent by one user equipment without any possible negative side effects in the communication. Hence it is easier to send a special bit pattern if both the first user equipment 120 and the second user equipment 130 co-operate in this. That, however, limits the applicability of this optimization.

Nevertheless, there might be some special applications that use some identifiable bit pattern that the radio base station may filter and indicate its presence in the respective first user equipment's 120 and second user equipment's 130 traffic signature.

### Simplification for H(e)NB with LIPA feature

In the case of the radio base station 110 is an LTE or 3G Enhanced Home NodeB (H(e)NB) and also supports a Local IP Access (LIPA) feature, the radio base station 110 also acts as a Gateway (GW). Note that LIPA may also be realized by a proprietary mechanism using a Network address translation (NAT) function, where this also applies. In its GW role, the radio base station 110 may decide whether an uplink packet is destined to an IP address which the radio base station 110 owns. In that way, the radio base station 110 in its GW role may check whether a packet is destined to another address of the same node, and if so, the two user equipments become candidates for a direct D2D connection. This simplifies the process, since the radio base station 110 does not have to calculate signatures for the traffic. Note though that this method would only discover if two user equipments communicate using the LIPA feature. To discover if two nearby user equipments communicate with each other via the operator core network, the radio base station 110 would continue to use the traffic signatures.

It is possible to extend this simplification also for the case of multiple base stations, where the neighbour radio base station 310 inform the radio base station 120 about which IP address ranges the neighbour radio base station 310 own, so that the radio base station 110 in its GW role can immediately decide whether an uplink packet is destined to the neighbour radio base station 310 in its GW role.

The embodiments herein provides a mechanism that can automatically discover the possibilities for user equipments to establish direct D2D communication path if they are capable of it. A great advantage of the method is that it does not require any additional user equipment involvement for the discovery process itself as it is based on the network's monitoring of the traffic.

The advantages of the use of the D2D communication connection is that it can allow higher throughput, lower delay for the user, and more efficient spectrum utilization for the operator.

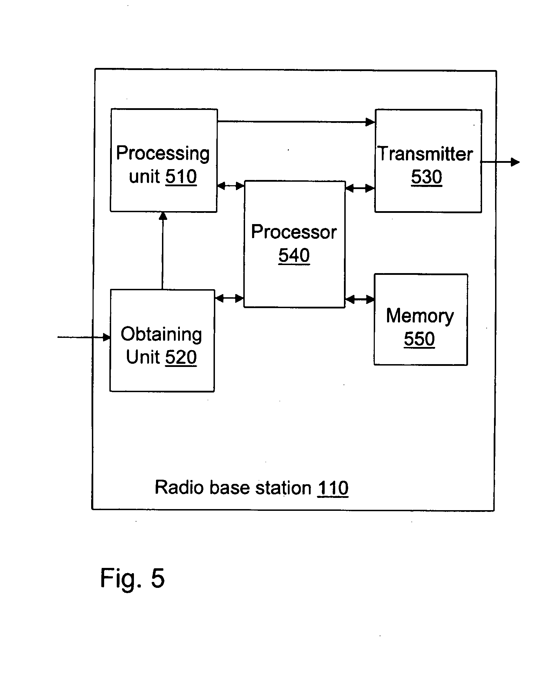

To perform the method actions in the radio base station 110, described above for establishing user equipment candidates for a direct D2D connection, the radio base station 110 comprises the following arrangement depicted in Figure 5. As mentioned above the D2D connection is wireless. The radio base station 110, the first user equipment 120 and second user equipment 130 are comprised in the wireless communication network 100.

The radio base station 110 comprises a processing unit 510 configured to detect that the first user equipment 120 transmits data packets to the second IP address via the radio base station 110 or receives data packets from the second IP address via the radio base station 110. The processing unit 510 is further configured to detect that the second IP address is assigned to a second user equipment 130.

The processing unit 510 is further configured to establish that the first user equipment 120 and the second user equipment 130 are candidates for a direct D2D connection between each other, based on the detection.

In some embodiments, the processing unit 510 is further configured to establish the expected quality of the direct D2D connection based on one or more channel quality measurement reports received from the first user equipment 120 and/or the second user equipment 130. The channel quality measurement reports regard the direct D2D connection.

In some embodiments, the processing unit 510 is further configured to establish the expected quality of the direct D2D connection based on the distance between the first user equipment 120 and the second user equipment 130.

The radio base station may further comprise an obtaining unit 520 configured to obtain the second IP address assigned to the second user equipment 130.

In some embodiments the first user equipment 120 is served by the radio base station 110 and the second user equipment 130 is served by the neighbour radio base station 310. In these embodiments the second IP address assigned to the second user equipment 130 may be obtained from the neighbour radio base station 310.

In some embodiments, the obtaining unit 520 is further configured to obtain an APN of a packet data network connected to the second user equipment 130 or a representation of the APN, and/or a PLMN of the second user equipment 130 or a representation of the PLMN. In these embodiments, the processing unit 510 further is configured to detect that the second IP address is assigned to the second user equipment 130 by means of the obtained APN or the representation of the APN and/or the PLMN or a representation of the PLMN.

In some embodiments, the obtaining unit 520 is further configured to obtain a token identifying an external packet data network, or a representation of the token. In these embodiments the processing unit 510 may further be configured to detect that the second IP address is assigned to the second user equipment 130 by means of the obtained token or representation of it.

In some embodiments the obtaining unit 520 is further configured to obtain a first representation of the data packets transmitted to the second IP address via the radio base station 110 in uplink transmission and a second representation of the data packets transmitted to the second IP address via the radio base station 110 in downlink transmission. In these embodiments, the processing unit 510 may further be configured to identify that said data packets transmitted in uplink transmission and said data packets transmitted in downlink transmission are the same data packets when the first representation of the data packets and the second representation of the data packets are identical. In these embodiments, the processing unit 510 may further be configured to detect that the second IP address is assigned to the second user equipment 130, by means of the identification that said data packets transmitted in uplink transmission and said data packets transmitted in downlink transmission are the same data packets.

In some embodiments the obtaining unit 520 is further configured to obtain a first IP address assigned to the first user equipment 130. In these embodiments the processing unit 510 is further configured to detect that the first user equipment 120 transmits data packets to the second IP address then being a destination IP address, via the radio base station 110 or receives data packets from the second IP address then being a source IP address, via the radio base station 110. In these embodiments the processing unit 510 is further configured to detect that the second user equipment 130 transmits data packets to the first IP address, then being a destination IP address, via the radio base station 110 or receives data packets from the first IP address, then being a source IP address, via the radio base station 110. Further, in these embodiments the processing unit 510 is configured to recognize that the data packet transmission is between two user equipments that the radio base station 110 serves, or that the radio base station 110 and the neighbour radio base station 310 serve when there is a match between the source IP address and the destination IP address of an uplink and a downlink flow, respectively.

In some embodiments, the APN of the packet data network connected to the second user equipment 130 or a representation of the APN, and/or the PLMN of the second user equipment 130 or a representation of the PLMN, is obtained from the neighbour radio base station 310. In these embodiments, the second representation of the data packets to the second IP address via the radio base station 110 in downlink transmission may be configured to be obtained in the obtaining unit 520 from the neighbour radio base station 310. In these embodiments, the downlink transmission may be performed from the neighbour radio base station 310 to the second user equipment 130.

The radio base station 110 according to any of the claims 15-16, further comprises a transmitter 530 that in some embodiments is configured to send an instruction to the respective first user equipment 120 and/or second user equipment 130. The instruction instructs the respective first user equipment 120 and/or second user equipment 130 to set up a direct D2D connection between each other.

In some embodiments, the transmitter 530 is further configured to receive a first information comprising that the first user equipment 120 has capabilities for a direct D2D connection, and a second information comprising that the second user equipment 130 has capabilities for a direct D2D connection. In these embodiments, the processing unit 510 may further be configured to detect that the first user equipment 120 and second user equipment 130 both have capabilities for a direct D2D connection. In these embodiments, the processing unit 510 may be configured to establish that the first user equipment 120 and second user equipment 130 are candidates for a direct D2D connection between each other, further based on that both the first user equipment 120 and the second user equipment 130 have capabilities for a direct D2D connection.

In some embodiments the first information further comprises that a first radio access technology configuration will be used by the first user equipment 120 for a D2D connection, and the second information further comprises that a second radio access technology configuration will be used by the second user equipment 130 for a D2D connection. In these embodiments, the processing unit 510 is further configured to detect that the first radio access technology configuration and second radio access technology configuration are configurations of the same technology. In these embodiments, the processing unit 510 may further be configured to establish that the first user equipment 120 and second user equipment 130 are candidates for a direct D2D connection between each other further based on that the first technology configuration and second technology configuration are configurations of the same technology.

In some embodiments the processing unit 510 may further be configured to establish an expected quality of the direct D2D connection. In these embodiments, the transmitter 530 may further be configured to send the instruction to the respective first user equipment 120 and second user equipment 130 when the expected quality passes a threshold.

The embodiments herein for establishing user equipment candidates for a direct D2D connection may be implemented through one or more processors, such as a processor 540 in the radio base station 110 depicted in Figure 5, together with computer program code for performing the functions and actions of the embodiments herein. The program code mentioned above may also be provided as a computer program product, for instance in the form of a data carrier carrying computer program code for performing the embodiments herein when being loaded into the in the radio base station 110. One such carrier may be in the form of a CD ROM disc or any other movable disk. It is however feasible with other data carriers such as a memory stick. The computer program code may furthermore be provided as pure program code on a server and downloaded to the radio base station 110.

The radio base station 110 may further comprise a memory 550 comprising one or more memory units. The memory 550 is arranged to be used to store data such as the obtained second IP address, first IP address, APN of the packet data network connected to the second user equipment 130 or a representation of the APN, and/or a PLMN of the second user equipment 130 or a representation of the PLMN, token identifying an external packet data network, or a representation of the token, first representation of the data packets transmitted to the second IP address via the radio base station 110 in uplink transmission and second representation of the data packets transmitted to the second IP address via the radio base station 110 in downlink transmission, schedulings, and applications to perform the methods herein when being executed in the radio base station 110.

When using the word "comprise" or "comprising" it shall be interpreted as non-limiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appending claims.

## Claims

1. A method in a radio base station (110) for establishing user equipment candidates for a direct device to device connection, which direct device to device connection is wireless, and which radio base station (110) is comprised in a wireless communication network (100), the method comprising:
*detecting* (204, 404) that a first user equipment (120) transmits data packets to a second Internet Protocol, IP, address then being a destination IP address via the radio base station (110) or receives data packets from the second IP address then being a source IP address via the radio base station (110), and that the second IP address is assigned to a second user equipment (130), which first user equipment (120) and second user equipment (130) are comprised in the wireless communication network (100), and *detecting* that the second user equipment (130) transmits data packets to a first IP address, then being a destination IP address, via the radio base station (110) or receives data packets from the first IP address, then being a source IP address, via the radio base station (110), and *recognizing* that the data packet transmission is between two user equipments that the radio base station (110) serves, or that the radio base station (110) and the neighbour radio base station (310) serve when there is a match between the source IP address and the destination IP address of an uplink and a downlink flow, respectively, and
*establishing* (205, 405) that the first user equipment (120) and the second user equipment (130) are candidates for a direct device to device connection between each other, based on the *detecting* (204, 404), the method being **characterized in**:
*receiving* (201, 401) a first information comprising that the first user equipment (120) has capabilities for a direct device to device connection, and a second information comprising that the second user equipment (130) has capabilities for a direct device to device connection, wherein the first information further comprises that a first radio access technology configuration will be used by the first user equipment (120) for a device to device connection, and wherein the second information further comprises that a second radio access technology configuration will be used by the second user equipment (130) for a device to device connection,
*obtaining* (202, 402) the second IP address assigned to the second user equipment (130), and obtaining the first IP address assigned to the first user equipment (130)
wherein the *detecting* (204, 404) further comprises:
detecting that the first user equipment (120) and second user equipment (130) both have capabilities for a direct device to device connection, and
detecting that the first radio access technology configuration and second radio access technology configuration are configurations of the same technology, and
wherein the *establishing* (205, 405) further is based on:
that both the first user equipment (120) and the second user equipment (130) have capabilities for a direct device to device connection, and
that the first technology configuration and second technology configuration are configurations of the same technology,
and wherein at least one of:
a) wherein the *obtaining* (202, 402) the second IP address assigned to the second user equipment (130), further comprises obtaining an access point name of a packet data network connected to the second user equipment (130) or a representation of the access point name, and/or a public land mobile network of the second user equipment (130) or a representation of the public land mobile network, and
wherein *detecting* (204, 404) that the second IP address is assigned to the second user equipment (130), is further based on the obtained access point name or the representation of it and/or the public land mobile network or the representation of the public land mobile network,
b) wherein the obtaining (202, 402) a second IP address assigned to the second user equipment (130), further comprises obtaining a token identifying an external packet data network, or a representation of the token, and
wherein detecting (204, 404) that the second IP address is assigned to the second user equipment (130), is further based on the obtained token or representation of it, and
c) wherein the obtaining (202, 402) the second IP address assigned to the second user equipment (130), further comprises obtaining a first representation of the data packets transmitted to the second IP address via the radio base station (110) in uplink transmission and a second representation of the data packets transmitted to the second IP address via the radio base station (110) in downlink transmission, the method further comprising:
identifying (203, 403) that said data packets transmitted in uplink transmission and said data packets transmitted in downlink transmission are the same data packets when the first representation of the data packets and the second representation of the data packets are identical, and
wherein detecting (204, 404) that the second IP address is assigned to the second user equipment (130), further comprises the identifying that said data packets transmitted in uplink transmission and said data packets transmitted in downlink transmission are the same data packets.

2. Method according to claim 1, further comprising:
*sending* (207, 407) an instruction to the respective first user equipment (120) and/or second user equipment (130), which instruction instructs the respective first user equipment (120) and/or second user equipment (130) to set up a direct device to device connection between each other.

3. Method according to any of the claims 1- 2, wherein the first user equipment (120) is served by the radio base station (110) and the second user equipment (130) is served by a neighbour radio base station (310), and wherein the second IP address assigned to the second user equipment (130) is obtained from the neighbour radio base station (310).

4. Method according to claim 3,
wherein the access point name of the packet data network connected to the second user equipment (130) or a representation of the access point name, and/or the public land mobile network of the second user equipment (130) is obtained from the neighbour radio base station (310), and/or
wherein the second representation of the data packets to the second IP address via the radio base station (110) in downlink transmission is obtained from the neighbour radio base station (310), wherein the downlink transmission is performed from the neighbour radio base station (310) to the second user equipment (130).

5. Method according to any of the claims 1- 4, further comprising
*establishing* (206, 406) an expected quality of the direct device to device connection,
and wherein the *sending* (207, 407) of the instruction to the respective first user equipment (120) and second user equipment (130) is performed when the expected quality passes a threshold.

6. Method according to claim 5, wherein the *establishing* (206, 406) the expected quality of the direct device to device connection is based on a channel quality measurement report received from the first user equipment (120) and/or the second user equipment (130), which channel quality measurement report regards the direct device to device connection.

7. Method according to any of the claims 5 or 6, wherein the *establishing* (206, 406) the expected quality of the direct device to device connection is based on the distance between the first user equipment (120) and the second user equipment (130).

8. A radio base station (110) for establishing user equipment candidates for a direct device to device connection, which connection is wireless, and which radio base station (110) is comprised in a wireless communication network (100), the radio base station (110) comprises:
a processing unit (510) configured to detect that a first user equipment (120) transmits data packets to a second Internet Protocol, IP, address then being a destination IP address via the radio base station (110) or receives data packets from the second IP address then being a source IP address via the radio base station (110), and that the second IP address is assigned to a second user equipment (130), which first user equipment (120) and second user equipment (130) are comprised in the wireless communication network (100), and to detect that the second user equipment (130) transmits data packets to a first IP address, then being a destination IP address, via the radio base station (110) or receives data packets from the first IP address, then being a source IP address, via the radio base station (110), and to recognize that the data packet transmission is between two user equipments that the radio base station (110) serves, or that the radio base station (110) and the neighbour radio base station (310) serve when there is a match between the source IP address and the destination IP address of an uplink and a downlink flow, respectively,
which processing unit (510) further is configured to establish that the first user equipment (120) and the second user equipment (130) are candidates for a direct device to device connection between each other, based on the detection, the radio base station (110) **characterized in** comprising:
a transmitter (530) configured to receive a first information comprising that the first user equipment (120) has capabilities for a direct device to device connection, and a second information comprising that the second user equipment (130) has capabilities for a direct device to device connection, wherein the first information further comprises that a first radio access technology configuration will be used by the first user equipment (120) for a device to device connection, and wherein the second information further comprises that a second radio access technology configuration will be used by the second user equipment (130) for a device to device connection,
an obtaining unit (520) configured to obtain the second IP address assigned to the second user equipment (130), and to obtain the first IP address assigned to the first user equipment (130)
wherein the processing unit (510) is further configured to:
detect that the first user equipment (120) and second user equipment (130) both have capabilities for a direct device to device connection, and
detect that the first radio access technology configuration and second radio access technology configuration are configurations of the same technology, and
establish that the first user equipment (120) and second user equipment (130) are candidates for a direct D2D connection between each other, further based on:
that both the first user equipment (120) and the second user equipment (130) have capabilities for a direct device to device connection, and
that the first technology configuration and second technology configuration are configurations of the same technology,
and wherein at least one of:
a) the obtaining unit (520) is further configured to obtain an access point name of a packet data network connected to the second user equipment (130) or a representation of the access point name, and/or a public land mobile network of the second user equipment (130) or a representation of the public land mobile network, wherein the processing unit (510) is further configured to detect that the second IP address is assigned to the second user equipment (130) by means of the obtained access point name or the representation of the access point name and/or the public land mobile network or a representation of the public land mobile network, and
b) the obtaining unit (520) is further configured to obtain a token identifying an external packet data network, or a representation of the token, wherein the processing unit (510) is further configured to detect that the second IP address is assigned to the second user equipment (130) by means of the obtained token or representation of it, and
c) the obtaining unit (520) is further configured to obtain a first representation of the data packets transmitted to the second IP address via the radio base station (110) in uplink transmission and a second representation of the data packets transmitted to the second IP address via the radio base station (110) in downlink transmission,
wherein the processing unit (510) is further configured to identify that said data packets transmitted in uplink transmission and said data packets transmitted in downlink transmission are the same data packets when the first representation of the data packets and the second representation of the data packets are identical, and
wherein the processing unit (510) is further configured to detect that the second IP address is assigned to the second user equipment (130), by means of the identification that said data packets transmitted in uplink transmission and said data packets transmitted in downlink transmission are the same data packets.

## Patentansprüche

1. Verfahren in einer Funkbasisstation (110) zum Festlegen von Benutzergerätkandidaten für eine direkte Gerät-zu-Gerät-Verbindung, wobei die direkte Gerät-zu-Gerät-Verbindung drahtlos ist und die Funkbasisstation (110) in einem drahtlosen Kommunikationsnetz (100) enthalten ist, wobei das Verfahren umfasst:
*Ermitteln* (204, 404), dass ein erstes Benutzergerät (120) Datenpakete an eine zweite Internetprotokoll- bzw. IP-Adresse, die dann eine Ziel-IP-Adresse ist, über die Funkbasisstation (110) überträgt oder Datenpakete von der zweiten IP-Adresse, die dann eine Quell-IP-Adresse ist, über die Funkbasisstation (110) empfängt und dass die zweite IP-Adresse einem zweiten Benutzergerät (130) zugeordnet ist, wobei das erste Benutzergerät (120) und das zweite Benutzergerät (130) in dem drahtlosen Kommunikationsnetz (100) enthalten sind, und *Ermitteln*, dass das zweite Benutzergerät (130) Datenpakete an eine erste IP-Adresse, die dann Ziel-IP-Adresse ist, über die Funkbasisstation (110) überträgt oder Datenpakete von der ersten IP-Adresse, die dann eine Quell-IP-Adresse ist, über die Funkbasisstation (110) empfängt, und *Erkennen,* dass die Datenpaketübertragung zwischen zwei Benutzergeräten erfolgt, die die Funkbasisstation (110) versorgt oder die die Funkbasisstation (110) und die Nachbar-Funkbasisstation (310) versorgen, wenn Übereinstimmung zwischen der Quell-IP-Adresse und der Ziel-IP-Adresse eines Uplink- bzw. Downlink-Flusses vorliegt, und
*Festlegen* (205, 405), dass das erste Benutzergerät (120) und das zweite Benutzergerät (130) Kandidaten für eine direkte Gerät-zu-Gerät-Verbindung zwischeneinander sind, auf der Grundlage der *Ermittlung* (204, 404), wobei das Verfahren **gekennzeichnet ist durch**:
*Empfanden* (201, 401) einer ersten Information, die beinhaltet, dass das erste Benutzergerät (120) Fähigkeiten für eine direkte Gerät-zu-Gerät-Verbindung hat, und einer zweiten Information, die beinhaltet, dass das zweite Benutzergerät (130) Fähigkeiten für eine direkte Gerät-zu-Gerät-Verbindung hat, wobei die erste Information ferner beinhaltet, dass das erste Benutzergerät (120) eine erste Funkzugangstechnologie-Konfiguration für die Gerät-zu-Gerät-Verbindung verwenden wird, und wobei die zweite Information ferner beinhaltet, dass das zweite Benutzergerät (130) eine zweite Funkzugangstechnologie-Konfiguration für eine Gerät-zu-Gerät-Verbindung verwenden wird,
*Beschaffen* (202, 402) der zweiten IP-Adresse, die dem zweiten Benutzergerät (130) zugeordnet ist, und Beschaffen der ersten IP-Adresse, die dem ersten Benutzergerät (130) zugeordnet ist,
wobei das *Ermitteln* (204, 404) ferner umfasst:
Ermitteln, dass sowohl das erste Benutzergerät (120) als auch das zweite Benutzergerät (130) Fähigkeiten für eine direkte Gerät-zu-Gerät-Verbindung haben, und
Ermitteln, dass die erste Funkzugangstechnologie-Konfiguration und die zweite Funkzugangstechnologie-Konfiguration Konfigurationen der gleichen Technologie sind, und
wobei das *Ermitteln* (205, 405) ferner darauf beruht:
dass sowohl das erste Benutzergerät (120) als auch das zweite Benutzergerät (130) Fähigkeiten für eine direkte Gerät-zu-Gerät-Verbindung haben und
dass sowohl die erste Technologie-Konfiguration als auch die zweite Technologie-Konfiguration Konfigurationen der gleichen Technologie sind, und
wobei zumindest eines von Folgendem gilt:
a) wobei das *Beschaffen* (202, 402) der zweiten IP-Adresse, die dem zweiten Benutzergerät (130) zugeordnet ist, ferner umfasst: Beschaffen eines Zugangspunktnamens eines Paketdatennetzes, das mit dem zweiten Benutzergerät (130) verbunden ist, oder einer Darstellung des Zugangspunktnamens und/oder eines öffentlichen Landfunknetzes des zweiten Benutzergeräts (130) oder einer Darstellung des öffentlichen Landfunknetzes, und
wobei das *Ermitteln* (204, 404), dass die zweite IP-Adresse dem zweiten Benutzergerät (130) zugeordnet ist, ferner auf dem beschafften Zugangspunktnamen oder seiner Darstellung und/oder dem öffentlichen Landfunknetz oder der Darstellung des öffentlichen Landfunknetzes beruht,
b) wobei das Beschaffen (202, 402) einer zweiten IP-Adresse, die dem zweiten Benutzergerät (130) zugeordnet ist, ferner umfasst: Beschaffen eines Tokens, das ein externes Paketdatennetz erkennt, oder einer Darstellung des Tokens, und
wobei das Beschaffen (204, 404), dass die zweite IP-Adresse dem zweiten Benutzergerät (130) zugeordnet ist, ferner auf dem beschafften Token oder auf seiner Darstellung beruht, und
c) wobei das Beschaffen (202, 402) der zweiten IP-Adresse, die dem zweiten Benutzergerät (130) zugeordnet ist, ferner umfasst: Beschaffen einer ersten Darstellung der Datenpakete, die an die zweite IP-Adresse über die Funkbasisstation (110) in einer Uplink-Übertragung übertragen werden, und einer zweiten Darstellung der Datenpakete, die an die zweite IP-Adresse über die Funkbasisstation (110) in einer Downlink-Übertragung übertragen werden, wobei das Verfahren ferner umfasst:
Erkennen (203, 403), dass die in einer Uplink-Übertragung übertragenen Datenpakete und die in einer Downlink-Übertragung übertragenen Datenpakete die gleichen Datenpakete sind, wenn die erste Darstellung der Datenpakete und die zweite Darstellung der Datenpakete identisch sind, und
wobei das Ermitteln (204, 404), dass die zweite IP-Adresse, die dem zweiten Benutzergerät (130) zugeordnet ist, ferner umfasst: Erkennen, dass die in einer Uplink-Übertragung übertragenen Datenpakete und die in einer Downlink-Übertragung übertragenen Datenpakete die gleichen Datenpakete sind.

2. Verfahren nach Anspruch 1, ferner umfassend:
*Senden* (207, 407) einer Anweisung jeweils an das erste Benutzergerät (120) und/oder zweite Benutzergerät (130), wobei die Anweisung jeweils das erste Benutzergerät (120) und/oder das zweite Benutzergerät (130) anweist, eine direkte Gerät-zu-Gerät-Verbindung zwischeneinander einzurichten.

3. Verfahren nach einem der Ansprüche 1 bis 2, wobei das erste Benutzergerät (120) durch die Funkbasisstation (110) versorgt wird und das zweite Benutzergerät (130) durch eine Nachbar-Basisstation (310) versorgt wird und wobei die zweite IP-Adresse, die dem zweiten Benutzergerät (130) zugeordnet ist, von der Nachbar-Funkbasisstation (310) stammt.

4. Verfahren nach Anspruch 3,
wobei der Zugangspunktname des Paketdatennetzes, das mit dem zweiten Benutzergerät (130) verbunden ist, oder eine Darstellung des Zugangspunktnamens und/oder das öffentliche Landfunknetz des zweiten Benutzergeräts (130) von der Nachbar-Funkbasisstation (310) stammt und/oder
wobei die zweite Darstellung der Datenpakete an die zweite IP-Adresse über die Funkbasisstation (110) in einer Downlink-Übertragung von der Nachbar-Basisstation (310) stammt, wobei die Downlink-Übertragung von der Nachbar-Basisstation (310) an das zweite Benutzergerät (130) erfolgt.

5. Verfahren nach einem der Ansprüche 1 bis 4, ferner umfassend:
*Festlegen* (206, 406) einer erwarteten Qualität der direkten Gerät-zu-Gerät-Verbindung,
und wobei das *Senden* (207, 407) der Anweisung an das jeweilige erste Benutzergerät (120) bzw. zweite Benutzergerät (130) erfolgt, wenn die erwartete Qualität einen Schwellenwert überschreitet.

6. Verfahren nach Anspruch 5, wobei das *Festlegen* (206, 406) der erwarteten Qualität der direkten Gerät-zu-Gerät-Verbindung auf einem Kanalqualitätsmessbericht beruht, der vom ersten Benutzergerät (120) und/oder vom zweiten Benutzergerät (130) empfangen wird, wobei der Kanalqualitätsmessbericht die direkte Gerät-zu-Gerät-Verbindung betrifft.

7. Verfahren nach einem der Ansprüche 5 oder 6, wobei das *Festlegen* (206, 406) der erwarteten Qualität der direkten Gerät-zu-Gerät-Verbindung auf der Entfernung zwischen dem ersten Benutzergerät (120) und dem zweiten Benutzergerät (130) beruht.

8. Funkbasisstation (110) zum Festlegen von Benutzergerätkandidaten für eine direkte Gerät-zu-Gerät-Verbindung, wobei die Verbindung drahtlos ist und die Funkbasisstation (110) in einem drahtlosen Kommunikationsnetz (100) enthalten ist, wobei die Funkbasisstation (110) umfasst:
eine Verarbeitungseinheit (510), die dafür konfiguriert ist, zu ermitteln, dass ein erstes Benutzergerät (120) Datenpakete an eine zweite Internetprotokoll- bzw. IP-Adresse, die dann eine Ziel-IP-Adresse ist, über die Funkbasisstation (110) überträgt oder Datenpakete von der zweiten IP-Adresse, die dann eine Quell-IP-Adresse ist, über die Funkbasisstation (110) empfängt und dass die zweite IP-Adresse einem zweiten Benutzergerät (130) zugeordnet ist, wobei das erste Benutzergerät (120) und das zweite Benutzergerät (130) in dem drahtlosen Kommunikationsnetz (100) enthalten sind, und zu ermitteln, dass das zweite Benutzergerät (130) Datenpakete an eine erste IP-Adresse, die dann eine Ziel-IP-Adresse ist, über die Funkbasisstation (110) überträgt oder Datenpakete von der ersten IP-Adresse, die dann eine Quell-IP-Adresse ist, über die Funkbasisstation (110) empfängt, und zu erkennen, dass die Datenpaketübertragung zwischen zwei Benutzergeräten erfolgt, die die Funkbasisstation (110) versorgt oder die die Funkbasisstation (110) und die Nachbar-Funkbasisstation (310) versorgen, wenn Übereinstimmung zwischen der Quell-IP-Adresse und der Ziel-IP-adresse eines Uplink- bzw. Downlink-Flusses vorliegt,
wobei die Verarbeitungseinheit (510) ferner dafür konfiguriert ist, auf der Grundlage der Ermittlung festzulegen, dass das erste Benutzergerät (120) und das zweite Benutzergerät (130) Kandidaten für eine direkte Gerät-zu-Gerät-Verbindung zwischeneinander sind, wobei die Funkbasisstation (110) **dadurch gekennzeichnet** ist, das sie umfasst:
einen Sender (530), der dafür konfiguriert ist, eine erste Information zu empfangen, die beinhaltet, dass das erste Benutzergerät (120) Fähigkeiten für eine direkte Gerät-zu-Gerät-Verbindung hat, und eine zweite Information zu empfangen, die beinhaltet, dass das zweite Benutzergerät (130) Fähigkeiten für eine direkte Gerät-zu-Gerät-Verbindung hat, wobei die erste Information ferner beinhaltet, dass das erste Benutzergerät (120) eine erste Funkzugangstechnologie-Konfiguration für eine Gerät-zu-Gerät-Verbindung verwendet, und wobei die zweite Information ferner beinhaltet, dass das zweite Benutzergerät (130) eine zweite Funkzugangstechnologie-Konfiguration für eine Gerät-zu-Gerät-Verbindung verwendet,
eine Beschaffungseinheit (520), die dafür konfiguriert ist, die zweite IP-Adresse, die dem zweiten Benutzergerät (130) zugeordnet ist, zu beschaffen und die erste IP-Adresse, die dem ersten Benutzergerät (130) zugeordnet ist, zu beschaffen,
wobei die Verarbeitungseinheit (510) ferner dafür konfiguriert ist:
zu ermitteln, dass sowohl das erste Benutzergerät (120) als auch das zweite Benutzergerät (130) Fähigkeiten für eine direkte Gerät-zu-Gerät-Verbindung haben, und
zu ermitteln, dass die erste Funkzugangstechnologie-Konfiguration und die zweite Funkzugangstechnologie-Konfiguration Konfigurationen der gleichen Technologie sind, und
festzulegen, dass das erste Benutzergerät (120) und das zweite Benutzergerät (130) Kandidaten für eine direkte D2D-(Gerät-zu-Gerät-)Verbindung zwischeneinander sind, was ferner darauf beruht:
dass sowohl das erste Benutzergerät (120) als auch das zweite Benutzergerät (130) Fähigkeiten für eine direkte Gerät-zu-Gerät-Verbindung haben und
dass die erste Technologie-Konfiguration und die zweite Technologie-Konfiguration Konfigurationen der gleichen Technologie sind, und wobei zumindest eines von Folgendem gilt, nämlich:
a) die Beschaffungseinheit (520) ferner dafür konfiguriert ist, einen Zugangspunktnamen eines Paketdatennetzes, das mit dem zweiten Benutzergerät (130) verbunden ist, oder eine Darstellung des Zugangspunktnamens und/oder ein öffentliches Landmobilfunknetz des zweiten Benutzergeräts (130) oder eine Darstellung des öffentlichen Landmobilfunknetzes zu beschaffen, wobei die Verarbeitungseinheit (510) ferner dafür konfiguriert ist, zu ermitteln, dass die zweite IP-Adresse dem zweiten Benutzergerät (130) zugeordnet ist, mit Hilfe des beschafften Zugangspunktnamens oder der Darstellung des Zugangspunktnamens und/oder des öffentlichen Landmobilfunknetzes oder einer Darstellung des öffentlichen Landmobilfunknetzes, und
b) die Beschaffungseinheit (520) ferner dafür konfiguriert ist, ein Token, das das externe Paketdatennetz erkennt, oder eine Darstellung des Tokens zu beschaffen, wobei die Verarbeitungseinheit (510) ferner dafür konfiguriert ist, mittels des beschafften Tokens oder seiner Darstellung zu ermitteln, dass die zweite IP-Adresse dem zweiten Benutzergerät (130) zugeordnet ist, und
c) die Beschaffungseinheit (520) ferner dafür konfiguriert ist, eine erste Darstellung der Datenpakete, die an die zweite IP-Adresse über die Funkbasisstation (110) in einer Uplink-Übertragung übertragen werden, und eine zweite Darstellung der Datenpakete, die an die zweite IP-Adresse über die Funkbasisstation (110) in einer Downlink-Übertragung übertragen werden zu beschaffen,
wobei die Verarbeitungseinheit (510) ferner dafür konfiguriert ist, zu erkennen, dass die in einer Uplink-Übertragung übertragenen Datenpakete und die in einer Downlink-Übertragung übertragenen Datenpakete die gleichen Datenpakete sind, wenn die erste Darstellung der Datenpakete und die zweite Darstellung der Datenpakete identisch sind, und
wobei die Verarbeitungseinheit (510) ferner dafür konfiguriert ist, zu ermitteln, dass die zweite IP-Adresse dem zweiten Benutzergerät (130) zugeordnet ist, dadurch, dass erkannt wird, dass die in der Uplink-Übertragung übertragenen Datenpakete und die in der Downlink-Übertragung übertragenen Datenpakete die gleichen Datenpakete sind.

## Revendications

1. Procédé dans une station radio de base (110) pour établir des équipements d'utilisateur candidats pour une connexion directe de dispositif à dispositif, laquelle connexion directe de dispositif à dispositif est une connexion sans fil, et laquelle station radio de base (110) est comprise dans un réseau de communication sans fil (100), le procédé comprenant :
la détection (204, 404) qu'un premier équipement d'utilisateur (120) transmet des paquets de données à une deuxième adresse de protocole Internet, IP, qui est alors une adresse IP de destination, par l'intermédiaire de la station radio de base (110) ou reçoit des paquets de données de la deuxième adresse IP qui est alors une adresse IP de source par l'intermédiaire de la station radio de base (110), et que la deuxième adresse IP est attribuée à un deuxième équipement d'utilisateur (130), lesquels premier équipement d'utilisateur (120) et deuxième équipement d'utilisateur (130) sont compris dans le réseau de communication sans fil (100), et la détection que le deuxième équipement d'utilisateur (130) transmet des paquets de données à une première adresse IP, qui est alors une adresse IP de destination, par l'intermédiaire de la station radio de base (110) ou reçoit des paquets de données de la première adresse IP, qui est alors une adresse IP de source, par l'intermédiaire de la station radio de base (110), et la reconnaissance que la transmission de paquets de données s'effectue entre deux équipements d'utilisateur que la station radio de base (110) dessert, ou que la station radio de base (110) et la station radio de base voisine (310) desservent lorsqu'il existe une correspondance entre l'adresse IP de source et l'adresse IP de destination de flux de liaison montante et de liaison descendante, respectivement, et
l'établissement (205, 405) que le premier équipement d'utilisateur (120) et le deuxième équipement d'utilisateur (130) sont des candidats pour une connexion directe de dispositif à dispositif entre eux, sur la base de la détection (204, 404), le procédé étant **caractérisé par** :
la réception (201, 401) de premières informations indiquant que le premier équipement d'utilisateur (120) a des capacités pour une connexion directe de dispositif à dispositif, et de deuxièmes informations indiquant que le deuxième équipement d'utilisateur (130) a des capacités pour une connexion directe de dispositif à dispositif, dans lequel les premières informations comprennent en outre celle qu'une première configuration de technologie d'accès radio sera utilisée par le premier équipement d'utilisateur (120) pour une connexion de dispositif à dispositif, et dans lequel les deuxièmes informations comprennent en outre celle qu'une deuxième configuration de technologie d'accès radio sera utilisée par le deuxième équipement d'utilisateur (130) pour une connexion de dispositif à dispositif,
l'obtention (202, 402) de la deuxième adresse IP attribuée au deuxième équipement d'utilisateur (130), et l'obtention de la première adresse IP attribuée au premier équipement d'utilisateur (130),
dans lequel la détection (204, 404) comprend en outre :
la détection que le premier équipement d'utilisateur (120) et le deuxième équipement d'utilisateur (130) ont tous deux des capacités pour une connexion directe de dispositif à dispositif, et
la détection que la première configuration de technologie d'accès radio et la deuxième configuration de technologie d'accès radio sont des configurations de la même technologie, et
dans lequel l'établissement (205, 405) est en outre basé sur
le fait que le premier équipement d'utilisateur (120) et le deuxième équipement d'utilisateur (130) ont tous deux des capacités pour une connexion directe de dispositif à dispositif, et
le fait que la première configuration de technologie et la deuxième configuration de technologie sont des configurations de la même technologie,
et dans lequel au moins l'un de :
a) dans lequel l'obtention (202, 402) de la deuxième adresse IP attribuée au deuxième équipement d'utilisateur (130) comprend en outre l'obtention d'un nom de point d'accès d'un réseau de données en mode paquet connecté au deuxième équipement d'utilisateur (130) ou d'une représentation du nom de point d'accès, et/ou d'un réseau mobile terrestre public du deuxième équipement d'utilisateur (130) ou d'une représentation du réseau mobile terrestre public, et
dans lequel la détection (204, 404) que la deuxième adresse IP est attribuée au deuxième équipement d'utilisateur (130) est en outre basée sur le nom de point d'accès obtenu ou la représentation de celui-ci et/ou sur le réseau mobile terrestre public ou la représentation du réseau mobile terrestre public,
b) l'obtention (202, 402) d'une deuxième adresse IP attribuée au deuxième équipement d'utilisateur (130) comprend en outre l'obtention d'un jeton identifiant un réseau de données en mode paquet externe, ou d'une représentation du jeton, et
dans lequel la détection (204, 404) que la deuxième adresse IP est attribuée au deuxième équipement d'utilisateur (130) est en outre basée sur le jeton obtenu ou la représentation de celui-ci, et
c) l'obtention (202, 402) de la deuxième adresse IP attribuée au deuxième équipement d'utilisateur (130) comprend en outre l'obtention d'une première représentation des paquets de données transmis à la deuxième adresse IP par l'intermédiaire de la station radio de base (110) dans une transmission de liaison montante et d'une deuxième représentation des paquets de données transmis à la deuxième adresse IP par l'intermédiaire de la station radio de base (110) dans une transmission de liaison descendante, le procédé comprenant en outre :
l'identification (203, 403) que lesdits paquets de données transmis dans une transmission de liaison montante et lesdits paquets de données transmis dans une transmission de liaison descendante sont les mêmes paquets de données lorsque la première représentation des paquets de données et la deuxième représentation des paquets de données sont identiques, et
dans lequel la détection (204, 404) que la deuxième adresse IP est attribuée au deuxième équipement d'utilisateur (130), comprend en outre l'identification que lesdits paquets de données transmis dans une transmission de liaison montante et lesdits paquets de données transmis dans une transmission de liaison descendante sont les mêmes paquets de données.

2. Procédé selon la revendication 1, comprenant en outre :
l'envoi (207, 407) d'une instruction au premier équipement d'utilisateur (120) et/ou au deuxième équipement d'utilisateur (130) respectifs, laquelle instruction ordonne au premier équipement d'utilisateur (120) et/ou au deuxième équipement d'utilisateur (130) respectifs d'établir une connexion directe de dispositif à dispositif entre eux.

3. Procédé selon l'une quelconque des revendications 1 et 2, dans lequel le premier équipement d'utilisateur (120) est desservi par la station radio de base (110) et le deuxième équipement d'utilisateur (130) est desservi par une station radio de base voisine (310), et dans lequel la deuxième adresse IP attribuée au deuxième équipement d'utilisateur (130) est obtenue de la station radio de base voisine (310).

4. Procédé selon la revendication 3,
dans lequel le nom de point d'accès du réseau de données en mode paquet connecté au deuxième équipement d'utilisateur (130) ou une représentation du nom de point d'accès, et/ou le réseau mobile terrestre public du deuxième équipement d'utilisateur (130) sont obtenus de la station radio de base voisine (310), et/ou
dans lequel la deuxième représentation des paquets de données à la deuxième adresse IP par l'intermédiaire de la station radio de base (110) dans une transmission de liaison descendante est obtenue de la station radio de base voisine (310), dans lequel la transmission de liaison descendante est effectuée de la station radio de base voisine (310) au deuxième équipement d'utilisateur (130).

5. Procédé selon l'une quelconque des revendications 1 à 4, comprenant en outre
l'établissement (206, 406) d'une qualité attendue de la connexion directe de dispositif à dispositif,
et dans lequel l'envoi (207, 407) de l'instruction au premier équipement d'utilisateur (120) et au deuxième équipement d'utilisateur (130) respectifs est effectué lorsque la qualité attendue dépasse un seuil.

6. Procédé selon la revendication 5, dans lequel l'établissement (206, 406) de la qualité attendue de la connexion directe de dispositif à dispositif est basé sur un rapport de mesure de qualité de canal reçu du premier équipement d'utilisateur (120) et/ou du deuxième équipement d'utilisateur (130), lequel rapport de mesure de qualité de canal concerne la connexion directe de dispositif à dispositif.

7. Procédé selon l'une quelconque des revendications 5 ou 6, dans lequel l'établissement (206, 406) de la qualité attendue de la connexion directe de dispositif à dispositif est basé sur la distance entre le premier équipement d'utilisateur (120) et le deuxième équipement d'utilisateur (130).

8. Station radio de base (110) pour établir des équipements d'utilisateur candidats pour une connexion directe de dispositif à dispositif, laquelle connexion est une connexion sans fil, et laquelle station radio de base (110) est comprise dans un réseau de communication sans fil (100), la station radio de base (110) comprenant :
une unité de traitement (510) configurée pour détecter qu'un premier équipement d'utilisateur (120) transmet des paquets de données à une deuxième adresse de protocole Internet, IP, qui est alors une adresse IP de destination, par l'intermédiaire de la station radio de base (110) ou reçoit des paquets de données de la deuxième adresse IP qui est alors une adresse IP de source par l'intermédiaire de la station radio de base (110), et que la deuxième adresse IP est attribuée à un deuxième équipement d'utilisateur (130), lesquels premier équipement d'utilisateur (120) et deuxième équipement d'utilisateur (130) sont compris dans le réseau de communication sans fil (100), et pour détecter que le deuxième équipement d'utilisateur (130) transmet des paquets de données à une première adresse IP, qui est alors une adresse IP de destination, par l'intermédiaire de la station radio de base (110) ou reçoit des paquets de données de la première adresse IP, qui est alors une adresse IP de source, par l'intermédiaire de la station radio de base (110), et pour reconnaître que la transmission de paquets de données s'effectue entre deux équipements d'utilisateur que la station radio de base (110) dessert, ou que la station radio de base (110) et la station radio de base voisine (310) desservent lorsqu'il existe une correspondance entre l'adresse IP de source et l'adresse IP de destination de flux de liaison montante et de liaison descendante, respectivement,
laquelle unité de traitement (510) est en outre configurée pour établir que le premier équipement d'utilisateur (120) et le deuxième équipement d'utilisateur (130) sont des candidats pour une connexion directe de dispositif à dispositif entre eux, sur la base de la détection, la station radio de base (110) étant **caractérisée en ce qu'**elle comprend :
un émetteur (530) configuré pour recevoir des premières informations comprenant celle que le premier équipement d'utilisateur (120) a des capacités pour une connexion directe de dispositif à dispositif, et des deuxièmes informations comprenant celle que le deuxième équipement d'utilisateur (130) a des capacités pour une connexion directe de dispositif à dispositif, dans laquelle les premières informations comprennent en outre celle qu'une première configuration de technologie d'accès radio sera utilisée par le premier équipement d'utilisateur (120) pour une connexion de dispositif à dispositif, et dans laquelle les deuxièmes informations comprennent en outre celle qu'une deuxième configuration de technologie d'accès radio sera utilisée par le deuxième équipement d'utilisateur (130) pour une connexion de dispositif à dispositif,
une unité d'obtention (520) configurée pour obtenir la deuxième adresse IP attribuée au deuxième équipement d'utilisateur (130), et pour obtenir la première adresse IP attribuée au premier équipement d'utilisateur (130),
dans laquelle l'unité de traitement (510) est en outre configurée pour :
détecter que le premier équipement d'utilisateur (120) et le deuxième équipement d'utilisateur (130) ont tous deux des capacités pour une connexion directe de dispositif à dispositif, et
détecter que la première configuration de technologie d'accès radio et la deuxième configuration de technologie d'accès radio sont des configurations de la même technologie, et
établir que le premier équipement d'utilisateur (120) et le deuxième équipement d'utilisateur (130) sont des candidats pour une connexion directe D2D entre eux, en outre sur la base :
que le premier équipement d'utilisateur (120) et le deuxième équipement d'utilisateur (130) ont tous deux des capacités pour une connexion directe de dispositif à dispositif, et
que la première configuration de technologie et la deuxième configuration de technologie sont des configurations de la même technologie, et dans laquelle au moins l'un de :
a) l'unité d'obtention (520) est en outre configurée pour obtenir un nom de point d'accès d'un réseau de données en mode paquet connecté au deuxième équipement d'utilisateur (130) ou une représentation du nom de point d'accès, et/ou un réseau mobile terrestre public du deuxième équipement d'utilisateur (130) ou une représentation du réseau mobile terrestre public, dans laquelle l'unité de traitement (510) est en outre configurée pour détecter que la deuxième adresse IP est attribuée au deuxième équipement d'utilisateur (130) au moyen du nom de point d'accès obtenu ou de la représentation du nom de point d'accès et/ou du réseau mobile terrestre public ou d'une représentation du réseau mobile terrestre public, et
b) l'unité d'obtention (520) est en outre configurée pour obtenir un jeton identifiant un réseau de données en mode paquet externe, ou une représentation du jeton, dans laquelle l'unité de traitement (510) est en outre configurée pour détecter que la deuxième adresse IP est attribuée au deuxième équipement d'utilisateur (130) au moyen du jeton obtenu ou de la représentation de celui-ci, et
c) l'unité d'obtention (520) est en outre configurée pour obtenir une première représentation des paquets de données transmis à la deuxième adresse IP par l'intermédiaire de la station radio de base (110) dans une transmission de liaison montante et une deuxième représentation des paquets de données transmis à la deuxième adresse IP par l'intermédiaire de la station radio de base (110) dans une transmission de liaison descendante,
dans laquelle l'unité de traitement (510) est en outre configurée pour identifier que lesdits paquets de données transmis dans une transmission de liaison montante et lesdits paquets de données transmis dans une transmission de liaison descendante sont les mêmes paquets de données lorsque la première représentation des paquets de données et la deuxième représentation des paquets de données sont identiques, et
dans laquelle l'unité de traitement (510) est en outre configurée pour détecter que la deuxième adresse IP est attribuée au deuxième équipement d'utilisateur (130), au moyen de l'identification que lesdits paquets de données transmis dans une transmission de liaison montante et lesdits paquets de données transmis dans une transmission de liaison descendante sont les mêmes paquets de données.
